# EUROPÄISCHE PATENTSCHRIFT

(11) **EP 2 806 248 B1**
(45) Veröffentlichungstag und Bekanntmachung des Hinweises auf die Patenterteilung: **12.09.2018**
(21) Anmeldenummer: 14163823.9
(22) Anmeldetag: 08.04.2014
(51) Int. Cl.: G01C 7/00, G01C 15/00, G01C 25/00

(54) **Verfahren zur Kalibrierung einer Erfassungseinrichtung und Erfassungseinrichtung**
Method for calibrating a detection device and detection device
Procédé d'étalonnage d'un dispositif de détection et dispositif de détection

(30) Priorität: 12.04.2013 EP 13163507; 01.10.2013 EP 13186896
(43) Veröffentlichungstag der Anmeldung: 26.11.2014
(73) Patentinhaber: Leica Geosystems AG, 9435 Heerbrugg (CH)
(72) Erfinder: Vennegeerts, Harald, 30167 Hannover (DE); Hesse, Christian, 21614 Buxtehude (DE); Frei, Erwin A., 8044 Zürich (CH)
(74) Vertreter: Kaminski Harmann

(56) Entgegenhaltungen:
- EP-A1- 2 570 769
- DE-A1-102009 040 468
- US-A1- 2003 202 089
- US-A1- 2009 262 974
- US-A1- 2013 029 685
- US-B1- 6 349 249

## Beschreibung

Die vorliegende Erfindung betrifft ein Verfahren zur Kalibrierung einer Erfassungseinrichtung, welche zur dreidimensionalen geometrischen Erfassung einer Umgebung ausgebildet ist und welche mindestens ein Inertial-Messsystem zur rechnerischen Bestimmung einer Trajektorie der Erfassungseinrichtung enthält. Zudem betrifft die Erfindung auch eine Erfassungseinrichtung, welche zur Ausführung eines solchen Verfahrens ausgebildet ist.

Eine gattungsgemässe Erfassungseinrichtung ist beispielsweise in der DE 10 2009 040 468 A1 beschrieben. Diese Erfassungseinrichtung enthält einen Laserscanner, mit dessen Hilfe eine Umgebung dreidimensional erfasst werden kann. Die Umgebung kann beispielsweise eine Industrieanlage oder eine Produktionsstätte sein. Um aus den mit dem Laserscanner erfassten Daten die Umgebung korrekt und präzise abbilden zu können, ist es offensichtlich von grosser Bedeutung, dass zu jedem Messzeitpunkt die Position und die Orientierung der Erfassungseinrichtung möglichst genau bekannt sind. Unter der Position der Erfassungseinrichtung wird hier und im Folgenden die Lage eines festen Bezugspunktes der Erfassungseinrichtung verstanden; die Orientierung gibt die Ausrichtung der Achsen eines gedachten, intrinsischen Koordinatensystems der Erfassungseinrichtung an. Der Bezugspunkt der Erfassungseinrichtung kann beispielsweise der Koordinatenursprung des gedachten, intrinsischen Koordinatensystems der Erfassungseinrichtung sein. Position und Orientierung haben also jeweils drei voneinander unabhängige und insgesamt sechs voneinander unabhängige Freiheitsgrade.

In vielen Fällen können zur Bestimmung von Position und Orientierung der Erfassungseinrichtung GPS-Signale oder andere globale Navigationssignale verwendet werden. Derartige Signale können jedoch nicht in jeder beliebigen Umgebung empfangen werden, beispielsweise in abgeschirmten Gebäuden. Zu diesem Zweck enthalten die bekannten Erfassungseinrichtungen (beispielsweise die in der DE 10 2009 040 468 A1 beschriebene) ein Inertial-Messsystem, mit dessen Hilfe die Beschleunigungen in drei Translationsrichtungen und drei Rotationsrichtungen bestimmt werden können. Sind Anfangsposition, Anfangsorientierung, Anfangsgeschwindigkeit und Anfangswinkelgeschwindigkeit bekannt, so können hieraus im Prinzip durch zweifache zeitliche Integration zu jedem späteren Zeitpunkt die Position und die Orientierung der Erfassungseinrichtung bestimmt werden, auch ohne dass GPS- oder andere Navigationssignale verfügbar sind.

Aufgrund mechanischer und rechnerischer Ungenauigkeiten ist allerdings nur eine näherungsweise Bestimmung von Position und Orientierung möglich. Mit der Zeit kommt es zu Abweichungen (einer sogenannten Drift) zwischen der mit Hilfe des Inertial-Messsystems bestimmten Position und Orientierung und der tatsächlichen Position und Orientierung. Ohne Gegenmassnahmen wird hierdurch auch die dreidimensionale Abbildung der Umgebung mit der Zeit immer ungenauer.

Die US 2003/0202089 A1 offenbart ein photogrammetrisches Videokamerasystem zum dreidimensionalen Modellieren eines Motivs.

Die US 6,349,249 B1betrifft Vermessungstechniken, insbesondere eine automatisierte Positioniervorrichtung zum Herstellen von Bergwerkstollen-Grundrissen.

Die US 2009/0262974 A1 offenbart ein System zur Erlangung von räumlichen Mappingdaten von Oberflächenpunkten, welche eine Region definieren, die von GPS Signalen abgeschirmt ist.

Die US2013/0029685 A1 betrifft ein Verfahren zur Ortung eines mobilen Gerätes.

Es ist daher eine Aufgabe der vorliegenden Erfindung, ein Verfahren und eine Erfassungseinrichtung bereitzustellen, mit denen diese Nachteile aus dem Stand der Technik überwunden werden. Insbesondere sollen Position und/oder Orientierung der Erfassungseinrichtung über einen möglichst langen Zeitraum hinweg möglichst präzise bestimmt werden können, und zwar auch ohne dass GPS- oder andere Navigationssignale verfügbar sind.

Diese Aufgabe wird zum einen gelöst durch ein erfindungsgemässes Verfahren zur Kalibrierung einer Erfassungseinrichtung. Die Erfassungseinrichtung ist zur dreidimensionalen geometrischen Erfassung einer Umgebung ausgebildet und enthält mindestens ein Inertial-Messsystem zur vorläufigen rechnerischen Bestimmung einer Trajektorie der Erfassungseinrichtung. Inertial-Messsysteme an sich sind dem Fachmann bekannt und bedürfen daher hier keiner weiteren Erläuterung. Unter der Trajektorie wird die Information über die Position und die Orientierung der Erfassungseinrichtung relativ zur Umgebung verstanden, und zwar in Abhängigkeit von der Zeit.

Das erfindungsgemässe Verfahren und die erfindungsgemässe Erfassungseinrichtung sind gekennzeichnet durch die Merkmale der jeweiligen unabhängigen Ansprüche.

Zur dreidimensionalen geometrischen Erfassung einer Umgebung kann die Erfassungseinrichtung beispielsweise einen an sich bekannten Laserscanner enthalten, so wie er beispielsweise DE 10 2009 040 468 A1 beschrieben ist.

Der mindestes eine Referenzpunkt ist bevorzugt ortsfest in Bezug auf die Umgebung; er bewegt sich also nicht relativ zur Umgebung. Es ist aber auch durchaus denkbar und im Rahmen der Erfindung, dass sich die Position des Referenzpunktes relativ zur Umgebung zeitlich ändert, sofern diese Position zu jedem Zeitpunkt des Verfahrens bekannt ist.

Der Referenzpunkt kann beispielsweise eine mit blossem Auge erkennbare Markierung sein. Eine solche Markierung kann etwa auf einem Fussboden oder an einer Wand einer Produktionsstätte, an konstruktiven und/oder dekorativen Elementen von Gebäuden, an Maschinen und Anlagen oder an sonstigen Einrichtungen angebracht sein. Ein, mehrere oder sämtliche Referenzpunkte können indiziert sein, also beispielsweise durch eine eindeutige Nummerierung und/oder eine eindeutige Codierung gekennzeichnet sein. Die Erfindung erlaubt es jedoch auch, dass keiner der Referenzpunkte eine solche Indizierung tragen muss, so dass insbesondere sämtliche Referenzpunkte zueinander identisch sein und sich nur durch ihre Position voneinander unterscheiden können, wie weiter unten noch im Detail erläutert wird.

Bei einer Relativkoordinate kann es sich beispielsweise um den Abstand eines festen Bezugspunktes der Erfassungseinrichtung von dem Referenzpunkt handeln. Alternativ kann die Relativkoordinate der Abstand des Bezugspunktes der Erfassungseinrichtung von einer Geraden sein, die durch zwei voneinander verschiedene Referenzpunkte definiert wird. In einer weiteren Möglichkeit kann die Relativkoordinate der Abstand des Bezugspunktes der Erfassungseinrichtung von einer Ebene sein, die durch drei nicht kollineare Referenzpunkte definiert ist. Ein Satz aus zwei Relativkoordinaten kann beispielsweise auch zwei kartesische Koordinaten enthalten oder daraus bestehen. Diese zwei kartesischen Koordinaten können die relative Lage der vertikalen Projektionen des Bezugspunktes der Erfassungseinrichtung und des Referenzpunktes auf eine horizontale Ebene angeben. Wird als Ursprung des kartesischen Koordinatensystems beispielsweise die vertikale Projektion des Referenzpunktes auf die horizontale Ebene gewählt, so sind die beiden kartesischen Koordinaten genau dann gleich null, wenn sich der Bezugspunkt der Erfassungseinrichtung genau vertikal oberhalb oder genau vertikal unterhalb des Referenzpunktes befindet. Die Relativkoordinate kann aber auch ein Winkel in einem Dreieck sein, welches durch den Bezugspunkt der Erfassungseinrichtung und zwei verschiedene Referenzpunkte definiert ist.

In einer ersten Variante i) von Schritt a) wird zunächst mindestens eine Relativkoordinate vorgegeben, und die Erfassungseinrichtung wird derart positioniert und/oder orientiert, dass diese vorgegebene Relativkoordinate eingenommen wird. In der zweiten Variante ii) von Schritt a) wird die Relativkoordinate nicht vorgegeben, sondern durch eine Messung bestimmt.

Gemäss Schritt b) wird eine Fehlergrösse bestimmt, welche die Abweichung der mindestens einen vorgegebenen oder durch Messung bestimmten Relativkoordinate von der/den vom Inertial-Messsystem vorläufig rechnerisch bestimmten Relativkoordinate(n) charakterisiert. Bei der Fehlergrösse kann es sich beispielsweise um den Betrag der Differenz einer vorgegebenen oder durch Messung bestimmten Relativkoordinate und einer vom Inertial-Messsystem vorläufig rechnerisch bestimmten Relativkoordinate handeln. Im Falle mehrerer Relativkoordinaten kann beispielsweise die Summe der Beträge der einzelnen Differenzen gewählt werden.

Die Bestimmung der Fehlergrösse in Schritt b) kann beispielsweise mit Hilfe eines rechnerischen Filters erfolgen, wie etwa mit Hilfe eines Kalman-Filters.

Die Positionierung und/oder Orientierung gemäss Schritt a) i), die Bestimmung der Relativkoordinate gemäss Schritt a) ii) und die Bestimmung der Fehlergrösse gemäss Schritt b) können für einen, mehrere oder sämtliche Referenzpunkte durchgeführt werden.

Falls die einzelnen Referenzpunkte indiziert sind und bekannt ist, in der Nähe welches Referenzpunktes sich die Erfassungseinrichtung zu einem bestimmten Zeitpunkt befindet, so kann es genügen, dass die genannten Schritte zu diesem Zeitpunkt nur für diesen einen Referenzpunkt durchgeführt werden. Der Erfassungseinrichtung kann manuell mitgeteilt werden (beispielsweise über eine Schnittstelle), in der Nähe welches Referenzpunktes sich die Erfassungseinrichtung befindet. Alternativ oder zusätzlich kann die Erfassungseinrichtung aber auch Mittel zur Bilderkennung enthalten, mit deren Hilfe erkannt werden kann, in der Nähe welches Referenzpunktes sie sich befindet.

Es ist jedoch nicht zwingend, dass die Referenzpunkte indiziert sind oder dass eine Bilderkennung von Referenzpunkten erforderlich ist. Beispielsweise können mehrere oder sämtliche Referenzpunkte durch identische Markierungen in einer Umgebung gebildet sein. In diesem Falle kann die Bestimmung der Relativkoordinate gemäss Schritt a) ii) und die Bestimmung der Fehlergrösse gemäss Schritt b) für mehrere oder sämtliche Referenzpunkte gleichzeitig durchgeführt werden. Die vom Inertial-Messsystem vorläufig rechnerisch bestimmte Trajektorie kann dann im Schritt c) derart korrigiert werden, dass die vorläufig rechnerische bestimmte Position und/oder Orientierung der Erfassungseinrichtung zu diesem Zeitpunkt durch die Position und/oder Orientierung ersetzt wird, die dem Referenzpunkt entspricht, für den die im Schritt b) bestimmte Fehlgrösse am kleinsten ist. Es muss also nicht von vornherein bekannt sein, in der Nähe welches einer Vielzahl von Referenzpunkten sich die Erfassungseinrichtung befindet.

Falls die genannte Fehlergrösse ein vorgegebenes Korrekturkriterium erfüllt, wird im Schritt c) die vom Inertial-Messsystem vorläufig rechnerisch bestimmte Trajektorie korrigiert.

Das Korrekturkriterium kann in einer ersten Variante sein, dass ein vorgegebener Schwellenwert überschritten ist. Der Schwellenwert kann dabei so gewählt werden, dass eine Korrektur stets dann erfolgt, wenn im Schritt b) eine Abweichung ermittelt wird; so kann beispielsweise (wie oben beschrieben) die Fehlergrösse durch den Betrag der Differenz definiert sein und als Schwellenwert null gewählt werden. Besonders bevorzugt wird zur Korrektur gemäss Schritt c) die vorläufig rechnerisch bestimmte Position und/oder Orientierung durch die Position und/oder Orientierung ersetzt, die sich aus der im Schritt a) i) vorgegebene Relativkoordinate oder der im Schritt a) ii) bestimmte Relativkoordinate ergibt.

In einer zweiten Variante kann das Korrekturkriterium ein vorgegebenes statistisches Kriterium sein. Beispielsweise kann das statistische Kriterium verlangen, dass eine Standardabweichung einer vom Inertial-Messsystem bestimmten Grösse einen vorgegebenen Schwellenwert nicht überschreitet. Bei der vom Inertial-Messsystem bestimmten Grösse kann es sich etwa um mindestens eine Koordinate handeln, die die Position und/oder die Orientierung der Erfassungseinrichtung charakterisiert. Die Standardabweichung ist dann die Fehlergrösse und kann von der Erfassungseinrichtung, insbesondere vom Inertial-Messsystem, durch einen vorgegebenen Algorithmus geschätzt werden. Hierzu können die dem Fachmann an sich bekannten Algorithmen für Fehlerabschätzungen verwendet werden.

Des Weiteren kann das Korrekturkriterium in einer dritten Variante auch einfach ein Nullkriterium sein; dies bedeutet, dass in jedem Fall und unabhängig von der Fehlergrösse eine Korrektur der vom Inertial-Messsystem vorläufig rechnerisch bestimmten Trajektorie erfolgt.

Das erfindungsgemässe Verfahren erlaubt es, die vom Inertial-Messsystem vorläufig rechnerisch bestimmte Trajektorie nachzukalibrieren. Hierdurch können die im Stand der Technik vorhandenen, mit der Zeit auftretenden Abweichungen zumindest reduziert werden. Damit ist auch eine präzise Erfassung der Umgebung über einen längeren Zeitraum möglich, wenn die erfindungsgemässen Verfahrensschritte in gewissen Zeitabständen durchgeführt werden, und zwar selbst dann, wenn weder ein GPS- noch ein anderes globales Navigationssignal verfügbar sind. Insbesondere im Gegensatz zur Lehre der DE 10 2009 040 468 A1, gemäss der zunächst eine (freie) Bewegung der Erfassungseinrichtung innerhalb einer Umgebung (enthaltend Schnittpunkte, Geradlinigkeit von Kanten etc.) und erst anschliessend die Integration von Navigationsinformationen aus der Umgebung oder externen Navigationssystemen erfolgt, erlaubt das erfindungsgemässe Verfahren von Anfang an eine kontrollierte Bewegung der Erfassungseinrichtung innerhalb der Umgebung und eine anschliessende Nutzung dieser Information über das Bewegungsverhalten als Navigationsinformation. Hierdurch kann eine Unabhängigkeit von der Umgebung und Navigationssignalen erreicht werden.

Bevorzugt erfolgt die Bestimmung der Fehlergrösse in Schritt b) zu einem Ruhezeitpunkt, an dem die Erfassungseinrichtung ruht oder zumindest im Wesentlichen ruht, d. h. zu einem Zeitpunkt, an dem ihre lineare Geschwindigkeit und ihre Winkelgeschwindigkeit null sind oder zumindest unterhalb von vorgegebenen Schwellenwerten liegen. Zu einem solchen Ruhezeitpunkt kann die Fehlergrösse im Schritt b) besonders präzise bestimmt werden.

Ein Ruhezeitpunkt kann in einer ersten Variante mit Hilfe des Inertial-Messsystems als ein Zeitpunkt bestimmt werden, an dem die vom Inertial-Messsystem berechnete Geschwindigkeit und Winkelgeschwindigkeit oder eine rechnerische Kombinationen davon null sind oder zumindest unterhalb von vorgegebenen Schwellenwerten liegen.

In einer zweiten Variante kann ein Benutzer der Erfassungseinrichtung manuell mitteilen, wenn er die Erfassungseinrichtung zum Ruhen gebracht hat (soweit ihm dies möglich ist). Die Eingabe kann insbesondere über eine Schnittstelle der Erfassungseinrichtung erfolgen.

Eine dritte Variante sieht vor, dass eine, mehrere oder sämtliche Komponenten der Geschwindigkeit und/oder der Winkelgeschwindigkeit mit Hilfe weiterer Komponenten der Erfassungseinrichtung bestimmt werden. Beispielsweise kann die Erfassungseinrichtung als Fahrzeug mit einem oder mehreren Rädern ausgebildet sein, wobei mit Hilfe eines an einem Rad angeordneten Radsensors eine Geschwindigkeitskomponente des Fahrzeugs bestimmt werden kann. Insbesondere liegt bei einem mit Hilfe eines solchen Radsensors bestimmten Stillstand des Fahrzeugs ein Ruhezeitpunkt vor. Ein Radsensor kann natürlich auch dazu verwendet werden, die vom Inertial-Messsystem zu einem Zeitpunkt berechnete Geschwindigkeit zu korrigieren, an dem das Fahrzeug nicht ruht.

In allen drei oben beschriebenen Varianten kann die vom Inertial-Messsystem berechnete Trajektorie zu einem Ruhezeitpunkt derart korrigiert werden, dass die berechnete Geschwindigkeit zu diesem Zeitpunkt auf null gesetzt wird (so genanntes "zero velocity update", ZUPT). Dieses "zero velocity update" kann als Indiz dafür verwendet werden, um eine Korrektur gemäss Schritt c) vorzunehmen.

Die Verfahrensschritte a), b) und c) können jeweils einfach oder auch mehrfach nacheinander ausgeführt werden. In einer Variante ist es möglich, dass Schritt a) zunächst mehrfach für die gleiche oder verschiedene Relativkoordinaten wiederholt wird, ohne dass zwischen den einzelnen Wiederholungen des Schritts a) die Schritte b) oder c) ausgeführt werden. Erst nach der letzten Wiederholung des Schritts a) können die Bestimmung der Fehlergrösse gemäss Schritt b) und die Korrektur gemäss Schritt c) für alle vorangehenden Wiederholungen des Schritts a) erfolgen. Die Korrektur der gesamten Trajektorie wird in dieser Variante also erst am Ende des Verfahrens durchgeführt. Alternativ oder zusätzlich ist es auch möglich, dass Schritt b) mehrfach nacheinander durchgeführt wird, insbesondere mehrfach nacheinander für ein und dieselbe Relativkoordinate oder mehrfach nacheinander für mehrere oder sämtliche Relativkoordinaten.

In einer anderen Variante können die Schritte a) und b) mehrfach nacheinander durchgeführt werden. Beispielsweise kann zunächst eine erste Positionierung erfolgen, dann die Bestimmung der Fehlergrösse für diese erste Position, anschliessend eine zweite Positionierung, danach die Bestimmung der Fehlergrösse für diese zweite Position, und erst am Ende wird gemäss Schritt c) die Korrektur für die gesamte Trajektorie durchgeführt.

Schliesslich ist es auch denkbar, dass für jede Positionierung gemäss Schritt a) direkt im Anschluss die Bestimmung der Fehlergrösse gemäss Schritt b) und die Korrektur gemäss Schritt c) erfolgen.

In einer möglichen Ausführungsform erfolgt im Schritt a) i) die Positionierung und/oder Orientierung durch einen mechanischen Kontakt eines Kontaktpunktes der Erfassungseinrichtung mit einem Referenzpunkt. Die Anordnung des Kontaktpunktes bestimmt dann den Abstand eines Bezugspunktes der Erfassungseinrichtung zum Referenzpunkt, und dieser Abstand kann die vorgegebene Relativkoordinate sein. Eine Positionierung und/oder Orientierung durch einen mechanischen Kontakt ist besonders präzise und zudem robust. Es ist denkbar, dass der Kontaktpunkt einen variabel einstellbaren Abstand vom Bezugspunkt hat. So kann beispielsweise der Kontaktpunkt das Ende eines ausziehbaren Stabes sein. Es kann eine Skala vorgesehen sein, der der Abstand vom Kontaktpunkt zum Bezugspunkt oder eine damit zusammenhängende Grösse abgelesen werden kann. Die Erfassungseinrichtung kann eine Schnittstelle aufweisen, über die der Benutzer den Abstand oder die damit zusammenhängende Grösse eingeben kann. Alternativ kann die Erfassungseinrichtung auch derart ausgebildet sein, dass sie den Abstand direkt messen und bei der Bestimmung der Fehlergrösse im Schritt b) verwenden kann.

Zur Positionierung und/oder Orientierung im Schritt a) i) kann alternativ oder zusätzlich ein von der Erfassungseinrichtung ausgesandter Lichtstrahl, insbesondere ein Laserstrahl, auf den Referenzpunkt gerichtet werden. Dies erlaubt eine kontaktlose und dennoch präzise Positionierung und/oder Orientierung, indem der Benutzer den Laserstrahl durch entsprechende Bewegung der Erfassungseinrichtung ausrichtet.

Alternativ oder zusätzlich kann zur Positionierung und/oder Orientierung im Schritt a) i) eine Kamera verwendet werden, die auf den Referenzpunkt gerichtet wird. Beispielsweise kann es sich um eine an sich bekannte CCD-Kamera handeln. Die Kamera kann beispielsweise bezüglich einer vertikalen Achse eines gedachten, intrinsischen Koordinatensystems der Erfassungseinrichtung nach unten gerichtet sein. Auf diese Weise können mit Hilfe der Kamera Bilder eines Fussbodens aufgenommen werden, beispielsweise eines Fussbodens einer Produktionsstätte. Diese Bilder können auf einem Bildschirm dargestellt werden. Auf dem Bildschirm kann zusätzlich ein Punkt eingeblendet werden, der der intrinsischen vertikalen Achse entspricht. Dies erlaubt dem Benutzer eine besonders einfache Positionierung, indem der Referenzpunkt mit dem eingeblendeten Punkt in Übereinstimmung gebracht wird.

Die Erfassungseinrichtung kann auch eine Bildverarbeitungseinrichtung enthalten, die mit der Kamera verbunden ist. Mit Hilfe einer solchen Bildverarbeitungseinrichtung kann beispielsweise der Abstand einer intrinsischen vertikalen Achse der Erfassungseinrichtung zu einem oder mehreren Referenzpunkten bestimmt werden. Dies erlaubt weitere Fehlerkorrekturen, falls die Erfassungseinrichtung nicht exakt gemäss der/den vorgegebenen Relativkoordinate(n) positioniert und/oder orientiert wird.

Die Positionierung gemäss Schritt a) ii) kann beispielsweise dadurch erfolgen, dass die Erfassungseinrichtung genau vertikal oberhalb von einem Referenzpunkt positioniert wird. In diesem Falle sind zwei Relativkoordinaten, die die relative Lage der vertikalen Projektionen des Bezugspunktes der Erfassungseinrichtung und des Referenzpunktes auf eine horizontale Ebene angeben, gleich null. Alternativ dazu muss die Erfassungseinrichtung nicht zwangsläufig genau vertikal oberhalb von einem Referenzpunkt positioniert werden; stattdessen kann mit Hilfe des Inertial-Messsystems und/oder mindestens eines Neigungssensors eine Orientierung der Erfassungseinrichtung bestimmt werden und bei der Bestimmung der Fehlergrösse im Schritt b) entsprechend rechnerisch berücksichtigt werden.

Die Bestimmung mindestens einer (nicht vorgegebenen) Relativkoordinate im Schritt a) ii) kann optisch erfolgen. Beispielsweise kann dies mit Hilfe mindestens eines Laserabstandmessers geschehen. Mit derartigen, an sich bekannten Laserabstandmessern ist eine besonders präzise Messung eines Abstandes möglich, insbesondere eines vertikalen oder eines horizontalen Abstandes eines Bezugspunktes der Erfassungseinrichtung von einem Referenzpunkt. Die Erfassungseinrichtung kann auch mehrere Laserabstandmesser enthalten, die in verschiedene Richtungen ausgerichtet sind. Beispielsweise kann ein erster Laserabstandmesser in einer ersten horizontalen Richtung ausgerichtet sein und ein zweiter Laserabstandmesser in einer zweiter entgegen gesetzten horizontalen Richtung. Eine horizontale Richtung wird hierbei als Richtung verstanden, die senkrecht zu einer intrinsischen vertikalen Achse der Erfassungseinrichtung verläuft.

Alternativ oder zusätzlich ist es auch möglich, dass die zu erfassende Umgebung mindestens einen Laserabstandmesser enthält, mit dessen Hilfe ein Abstand der Erfassungseinrichtung vom Laserabstandmesser bestimmbar ist. Um dies zu unterstützen, kann die Erfassungseinrichtung mindestens einen Reflektor enthalten, mit dessen Hilfe ein vom Laserabstandsmesser ausgesandter Laserstrahl wieder zu diesem reflektiert werden kann.

Alternativ oder zusätzlich kann die Erfassungseinrichtung mindestens einen Retroreflektor enthalten, also einen Reflektor, welcher einfallende Strahlung weitgehend unabhängig von der Ausrichtung des Reflektors grossteils in Richtung zurück zur Strahlungsquelle reflektiert. Derartige Retroreflektoren sind an sich bekannt und können beispielsweise als Tripelspiegel oder Tripelprismen ausgebildet sein. Im Rahmen der Erfindung besonders bevorzugt sind jedoch sogenannte Rundprismen, die ebenfalls an sich bekannt sind. Ein derartiges Rundprisma erlaubt es in horizontaler Lage, elektro-optische Signale aus beliebigen horizontalen Raumrichtungen zentrisch zu reflektieren.

Die Position einer Erfassungseinrichtung mit einem Retroreflektor kann mit Hilfe eines ebenfalls an sich bekannten Tachymeters bestimmt werden, insbesondere mit Hilfe eines zielerfassenden oder sogar zielverfolgenden Tachymeters. Hierzu kann das Tachymeter einen Lichtstrahl aussenden, welcher vom Retroreflektor, insbesondere vom Rundprisma, der Erfassungseinrichtung zurück zum Tachymeter reflektiert wird. Auf an sich bekannte Weise kann hierdurch mindestens eine Relativkoordinate des Retroreflektors bestimmt werden. Indirekt kann auf diese Weise im Schritt a) ii) der besonderen Ausführungsform des Verfahrens mindestens eine Relativkoordinate der Erfassungseinrichtung bestimmt werden, die deren Position und/oder Orientierung charakterisiert. Auf der Grundlage dieser Bestimmung kann dann im Schritt c) gegebenenfalls eine Korrektur der vom Inertial-Messsystem vorläufig rechnerisch bestimmten Trajektorie erfolgen.

Damit die Bestimmung der Fehlergrösse im Schritt b) korrekt durchgeführt werden kann, muss/müssen die vom Inertial-Messsystem vorläufig bestimmte(n) Relativkoordinate(n) für den gleichen Zeitpunkt bestimmt werden, zu dem im Schritt a) i) die Positionierung und/oder Orientierung der Erfassungseinrichtung oder zu dem im Schritt a) ii) die Bestimmung der mindestens einen Relativkoordinate erfolgte. Hierzu kann der Zeitpunkt der Durchführung des Schritts a) i) oder a) ii) entlang einer absoluten Zeitskala bestimmt und festgehalten werden. Die vom Inertial-Messsystem vorläufig bestimmte Relativkoordinate(n) wird dann zu diesem Zeitpunkt bestimmt, der entlang der gleichen absoluten Zeitskala gemessen wird. Gegebenenfalls können die Zeitskalen für die Positionierung und/oder Orientierung der Erfassungseinrichtung im Schritt a) i) bzw. für die Bestimmung der mindestens einen Relativkoordinate im Schritt a) ii) einerseits und für die vorläufige rechnerische Bestimmung andererseits miteinander synchronisiert werden.

Es ist jedoch auch möglich, auf eine solche absolute Zeitskala und eine Synchronisation zu verzichten. Hierzu können in mehreren aufeinanderfolgenden Schritten a) ii) zunächst jeweilige Relativkoordinaten bestimmt werden - beispielsweise an wie oben beschriebenen Ruhezeitpunkten der Erfassungseinrichtung und/oder mit Hilfe eines Tachymeters und eines Retroreflektors. Diese Zeitpunkte müssen aber nicht zwingend entlang einer absoluten Zeitskala bestimmt oder festgehalten werden. Stattdessen kann für jeden Ruhezeitpunkt der Abstand zwischen der/den vom Inertial-Messsystem vorläufig rechnerisch bestimmten Koordinate(n) von den in den Schritten a) ii) bestimmten Relativkoordinaten ermittelt werden. Die Korrektur im Schritt c) erfolgt dann auf der Grundlage derjenigen Relativkoordinaten, für die dieser Abstand am geringsten ist.

In einigen Ausführungsformen ist mindestens eine absolute Koordinate mindestens eines Referenzpunktes bekannt, und diese mindestens eine absolute Koordinate wird bei der Bestimmung der Fehlergrösse in Schritt b) verwendet. Als absolute Koordinate eines Referenzpunktes wird dabei eine Koordinate verstanden, die die Position dieses Referenzpunktes innerhalb der zu erfassenden Umgebung charakterisiert. Beispielsweise kann es sich dabei um eine oder mehrere in Bezug auf die Umgebung ortsfeste kartesische Koordinaten des Referenzpunktes handeln. Die absolute Koordinate kann beispielsweise vom Benutzer über eine Schnittstelle der Erfassungseinrichtung eingegeben werden.

Alternativ oder zusätzlich kann mindestens eine Relativkoordinate, die die relative Position und/oder die relative Orientierung mindestens zweier Referenzpunkte zueinander charakterisiert, bekannt sein. So kann beispielsweise der Abstand zweier Referenzpunkte voneinander bekannt sein. Die Relativkoordinate kann auch ein Winkel eines Dreiecks sein, dessen drei Eckpunkte durch jeweils einen von drei Referenzpunkten gebildet sind.

Bekannte Relativkoordinaten, die die relative Position und/oder die relative Orientierung mindestens zweier Referenzpunkte zueinander charakterisieren, können wie folgt verwendet werden: Zunächst kann die Erfassungseinrichtung gemäss einer ersten vorgegebenen Relativkoordinate positioniert werden - beispielsweise genau vertikal oberhalb eines ersten Referenzpunktes. Anschliessend kann die Erfassungseinrichtung gemäss einer zweiten vorgegebenen Relativkoordinate positioniert werden - beispielsweise genau vertikal oberhalb eines zweiten Referenzpunktes. Während der Bewegung vom ersten Referenzpunkt zum zweiten Referenzpunkt wird mit Hilfe des Inertial-Messsystems der Abstand zwischen diesen beiden Referenzpunkten bestimmt. Stimmt dieser mit Hilfe des Inertial-Messsystems rechnerisch bestimmte Abstand nicht mit dem tatsächlichen Abstand überein, so erfolgt eine Korrektur der vorläufig rechnerisch bestimmten Trajektorie.

Im Rahmen der Erfindung ist es aber nicht zwingend, dass absolute Koordinaten der Referenzpunkte oder Relativkoordinaten, die die relative Position und/oder die relative Orientierung zweier Referenzpunkte zueinander charakterisieren, bekannt sind. In einigen möglichen Ausführungsformen kann nämlich Schritt a) i) mehrfach nacheinander für ein und denselben Referenzpunkt durchgeführt werden. Wird die Erfassungseinrichtung zu zwei verschiedenen Zeitpunkten in die gleiche Position und Orientierung gebracht, ergibt jedoch die vorläufige rechnerische Bestimmung durch das Inertial-Messsystem verschiedene Positionen und/oder Orientierungen, so kann dies ebenfalls zur Korrektur im Schritt c) verwendet werden. In der hier beschriebenen Ausführungsform ist es auch nicht erforderlich, dass der Referenzpunkt eine permanente Markierung ist oder dass seine absoluten Koordinaten bekannt sind. Beispielsweise ist es denkbar, dass der Referenzpunkt eine temporäre Markierung ist, etwa in Form eines Klebepunktes, der zu Beginn des Verfahrens an einem Punkt der Umgebung befestigt wird und nach Ende des Verfahrens wieder entfernt werden kann.

Alternativ können mehrere Referenzpunkte durch vorgegebene Punkte eines Musters eines Bodenbelages der Umgebung definiert sein. Ist der Abstand zweier Referenzpunkte des Musters bekannt, so kann dieser Abstand im Schritt b) zur Bestimmung einer Fehlergrösse verwendet werden. Handelt es sich beispielsweise um ein periodisches Muster mit bekannter Periodenlänge, wie es etwa bei einem Fliesenboden der Fall ist, so können zwei Punkte des Musters als Referenzpunkte verwendet werden, deren Abstand ein bekanntes ganzzahliges Vielfaches dieser Periodenlänge ist. Mehrere Referenzpunkte können auch genau vertikal übereinander angeordnet sein. Dies kann beispielsweise in einem Gebäude ausgenutzt werden, von dem bereits bekannt ist, dass mehrere übereinander liegende Stockwerke mit bekannter Stockwerkshöhe identische Grundrisse aufweisen. Auch in diesen Beispielen ist die Kenntnis absoluter Koordinaten der Referenzpunkte nicht zwingend erforderlich.

In vorteilhaften Ausführungsformen liegen mindestens drei, bevorzugt mindestens fünf verschiedene Referenzpunkte auf einer gemeinsamen Referenzstrecke. Gemäss der üblichen Definition wird auch hier eine Strecke stets als gerade Linie verstanden. Besonders bevorzugt ist es, wenn die Abstände der Referenzpunkte, die auf einer gemeinsamen Referenzstrecke liegen, bekannt sind.

Die Referenzstrecken können sowohl horizontal als auch vertikal als auch geneigt sein. Horizontale Referenzstrecken können beispielsweise auf einem Fussboden einer Fabrikationsstätte vorhanden sein. Vertikale Referenzstrecken sind etwa an Wänden einer Fabrikationsstätte denkbar. Eine vertikale Referenzstrecke kann auch etwa durch mehrere vertikal übereinander angeordnete Referenzpunkte gebildet sein, die sich zum Beispiel in mehreren übereinander angeordneten Stockwerken befinden. Eine geneigte Referenzstrecke kann durch die Vorderkanten mehrerer Stufen einer Treppe definiert sein, wobei Punkte der Vorderkante Referenzpunkte bilden.

Es ist ebenso denkbar und liegt im Rahmen der Erfindung, dass eine erste Teilmenge von mindestens drei Referenzpunkten auf einer ersten gemeinsamen Referenzstrecke liegt und eine zweite Teilmenge von weiteren mindestens drei Referenzpunkten auf einer zweiten gemeinsamen Referenzstrecke liegen, wobei die erste und die zweite Referenzstrecke nicht parallel zueinander sein müssen.

Mindestens eine der Referenzstrecken kann durch einen Referenzlaserstrahl definiert werden. Der Referenzlaserstrahl kann horizontal, vertikal oder geneigt verlaufen. Als Relativkoordinaten eignen sich besonders die kartesischen Koordinaten der Projektion eines Bezugspunktes der Erfassungseinrichtung auf eine senkrecht zum Referenzlaserstrahl verlaufenden Ebene.

Der Referenzlaserstrahl kann von einem Laser ausgesandt werden, der fest montiert ist (beispielsweise an einer Wand oder einer Decke einer Produktionsstätte). Der Laser kann aber auch transportabel sein und zu Beginn des Verfahrens installiert und nach Ende des Verfahrens wieder deinstalliert werden. Bevorzugt handelt es sich um einen sichtbaren Referenzlaserstrahl. Selbstverständlich sind auch mehrere Referenzlaserstrahlen möglich, wobei diese jeweils eine Referenzstrecke definieren. Die Referenzlaserstrahlen müssen nicht zwingend parallel zueinander sein, müssen also auch keine zueinander parallelen Referenzstrecken definieren.

Der Referenzlaserstrahl kann mit Hilfe eines Laserdetektors detektiert werden, der Bestandteil der Erfassungseinrichtung sein kann. Bei dem Laserdetektor kann es sich um einen 360°-Laserdetektor handeln; ein solcher Laserdetektor kann Laserstrahlen detektieren, die aus einem 360°-Vollkreis auf ihn auftreffen. Basierend auf der Detektion des Referenzlaserstrahls kann dann die relative Position und/oder Orientierung der Erfassungseinrichtung zum Referenzlaserstrahl bestimmt werden. Beispielsweise kann der Abstand des Referenzlaserstrahls von einer intrinsischen vertikalen Achse der Erfassungseinrichtung bestimmt werden. Alternativ oder zusätzlich kann mit Hilfe des Laserdetektors bestimmt werden, an welchem Punkt der intrinsischen vertikalen Achse der Erfassungseinrichtung der Referenzlaserstrahl auftrifft.

Die mit dem Laserdetektor ermittelten Daten können zeitmarkiert, gespeichert und sofort oder später weiterverarbeitet werden. Optional kann die Erfassungseinrichtung ein optisches Signal und/oder ein akustisches Signal ausgeben, wenn der Referenzlaserstrahl in einer vorgegebenen Position oder in einem vorgegebenen Bereich von möglichen Positionen auf den Laserdetektor auftrifft.

Alternativ oder zusätzlich zu einem Laserdetektor kann die Erfassungseinrichtung auch mindestens einen Reflektor enthalten. Trifft ein Referenzlaserstrahl auf einen solchen Reflektor, so kann dies vom Benutzer leicht erkannt werden.

In einer Variante der Erfindung liegen mehrere Referenzpunkte auf einer vorgegebenen Trajektorie. Diese Trajektorie kann einen oder mehrere geradlinige Referenzstrecken enthalten, wobei mehrere Referenzstrecken der Trajektorie nicht notwendigerweise parallel sein müssen. Die Erfassungseinrichtung kann entlang der vorgegebenen Trajektorie bewegt werden. Der Benutzer kann beispielsweise über eine entsprechende Schnittstelle eingeben, dass er die Erfassungseinrichtung zunächst entlang einer ersten Referenzstrecke bewegt, die von einem Referenzpunkt zu einem zweiten Referenzpunkt verläuft, anschliessend die Erfassungseinrichtung auf einem nicht definierten Weg zu einem dritten Referenzpunkt bewegt und anschliessend entlang einer Referenzstrecke bewegt, die von diesem dritten Referenzpunkt zu einem vierten Referenzpunkt verläuft. Durch Vergleich der mittels der Schnittstelle eingegebenen Information, dass die Erfassungseinrichtung nacheinander entlang von zwei Referenzstrecken bewegt wurde, und anhand der vom Inertial-Messsystem bestimmten vorläufigen Trajektorie können dann wiederum entsprechende Korrekturen an der Trajektorie vorgenommen werden. In einer vorteilhaften Variante können die Referenzstrecken auch in diesem Ausführungsbeispiel durch einen oder mehrere Referenzlaserstrahlen definiert sein.

Wie bereits eingangs erläutert wurde, nimmt die Messungenauigkeit des Inertial-Messsystems mit der Zeit zu, solange keine Kalibrierung erfolgt. Im Sinne einer möglichst genauen Erfassung der Umgebung sollte in gewissen Zeitabständen eine Kalibrierung gemäss dem erfindungsgemässen Verfahren durchgeführt werden. Um den Benutzer hieran zu erinnern, kann die Erfassungseinrichtung eine Warnmeldung ausgeben, falls die seit der letzten Kalibrierung verstrichene Zeit ein vorgegebenes Warnintervall überschreitet. Die Warnmeldung kann optisch und/oder akustisch ausgegeben werden.

Ein weiterer Aspekt der Erfindung betrifft eine Erfassungsvorrichtung zur dreidimensionalen geometrischen Erfassung einer Umgebung, wobei die Erfassungseinrichtung mindestens ein Inertial-Messsystem zur vorläufigen rechnerischen Bestimmung einer Trajektorie der Erfassungseinrichtung enthält. Erfindungsgemäss enthält die Erfassungseinrichtung weiterhin Rechenmittel, welche insbesondere derart ausgebildet sein können, um ein wie oben beschriebenes Verfahren durchzuführen. Mit einer solchen besonderen Erfassungseinrichtung kann also das oben beschriebene Verfahren mit den dort jeweils beschriebenen Vorteilen durchgeführt werden.

Die Erfassungseinrichtung kann Positionierungs- und/oder Orientierungsmittel zur Positionierung und/oder Orientierung der Erfassungseinrichtung in einer relativen Position und/oder relativen Orientierung zu mindestens einem Referenzpunkt enthalten, wobei die relative Position und/oder relative Orientierung durch mindestens eine vorgegebene Relativkoordinate charakterisiert ist. Die Positionierungs- und/oder Orientierungsmittel können beispielsweise mindestens einen wie oben beschriebenen Kontaktpunkt enthalten, der mit mindestens einem Referenzpunkt in Kontakt bringbar ist. Bei dem Positionierungs- und/oder Orientierungsmittel kann es sich beispielsweise um einen Laser handeln, der einen Laserstrahl aussenden kann, der auf einen Referenzpunkt gerichtet werden kann. Die Positionierungs- und/oder Orientierungsmittel können auch optische Erfassungsmittel zur Bestimmung mindestens einer Relativkoordinate enthalten, wie beispielsweise mindestens eine Kamera, welche auf einen Referenzpunkt gerichtet werden kann.

Alternativ oder zusätzlich kann die Erfassungseinrichtung insbesondere optische Bestimmungsmittel zur Bestimmung mindestens einer Relativkoordinate enthalten, die die relative Position und/oder die relative Orientierung der Erfassungseinrichtung zu mindestens einem Referenzpunkt charakterisiert. Die Bestimmungsmittel können etwa als Laserabstandmesser ausgebildet sein.

Allerdings ist es auch denkbar und liegt im Rahmen der Erfindung, dass die Erfassungseinrichtung weder wie oben beschriebene Positionierungs- und/oder Orientierungsmittel noch wie oben beschriebene Bestimmungsmittel enthält. Beispielsweise kann die Erfassungseinrichtung auch durch blosses Augenmass des Benutzers auf gewünschte Weise positioniert und/oder orientiert werden. Auch die Bestimmung mindestens einer Relativkoordinate gemäss Schritt a) ii) kann beispielsweise mit einem separaten Messgerät erfolgen, welches nicht Bestandteil der Erfassungseinrichtung ist.

Zur ergänzenden Kalibrierung kann die Erfassungseinrichtung auch noch weitere an sich bekannte Bauelemente aufweisen, so wie sie etwa in der DE 10 2009 040 468 A1 beschrieben sind (unter anderem einen oder mehrere Magnetfeldsonden, die zur Ermittlung von Azimutänderungen verwendet werden können; und/oder mindestens einen, bevorzugten mindestens zwei hoch auflösende kreuzweise angeordnete Neigungssensoren, die Verschwenkungen aus einer Horizontalebene ermitteln können; und/oder mindestens einen Empfänger für ein globales Navigationssignal zur Verwendung in Umgebungen, in denen ein solches Signal verfügbar ist).

Die Erfassungseinrichtung kann als tragbares Gerät ausgebildet sein. Es kann mit Hilfe von Trageinrichtungen an einem menschlichen Körper befestigt werden. Hierdurch werden auch Umgebungen zugänglich, die durch Fahrzeuge üblicherweise nicht erreicht werden können. Mit Hilfe einer zusätzlichen Dämpfungseinrichtung können Relativbewegungen zwischen Trageinrichtung und Erfassungseinrichtung kompensiert werden. Diesbezüglich wird nochmals auf die DE 10 2009 040 468 A1 verwiesen. Alternativ ist es aber

auch möglich und liegt im Rahmen der Erfindung, dass die Erfassungseinrichtung als Fahrzeug ausgebildet ist.

Im Folgenden wird die Erfindung anhand von mehreren Ausführungsbeispielen im Detail erläutert. Dabei zeigen
- Figur 1:: eine erste Ausführungsform einer erfindungsgemässen Erfassungseinrichtung;
- Figuren 2a bis c:: drei weitere Ausführungsformen erfindungsgemässer Erfassungseinrichtungen;
- Figuren 3a und b:: zwei mögliche Trajektorien, entlang denen einer Erfassungseinrichtung bewegt werden kann;
- Figuren 4a und b:: zwei Trajektorien mit geradlinigen Referenzstrecken, entlang denen eine Erfassungseinrichtung bewegt werden kann;
- Figur 5:: eine weitere Trajektorie mit geradlinigen Referenzstrecken, entlang der eine Erfassungseinrichtung bewegt werden kann;
- Figuren 6a und b:: zwei weitere Trajektorien, entlang denen eine Erfassungseinrichtung bewegt werden kann;
- Figuren 7a und b:: eine Anordnung zur Positionsbestimmung mit Hilfe eines Laserstrahls;
- Figur 8:: eine Anordnung zur Positionsbestimmung mit Hilfe zweier Laserstrahlen;
- Figur 9:: eine weitere Trajektorie, entlang der eine Erfassungseinrichtung bewegt werden kann;
- Figur 10:: eine Erfassungseinrichtung mit zwei Laserabstandmessern;
- Figur 11:: eine Erfassungseinrichtung mit einem Rundprisma.

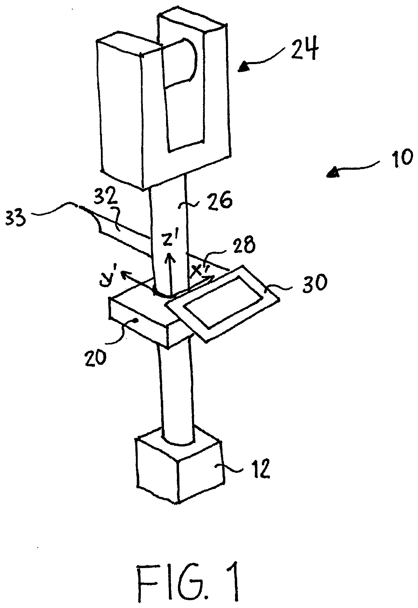

Figur 1 zeigt eine erste Ausführungsform einer erfindungsgemässen tragbaren Erfassungseinrichtung 10. Die Erfassungseinrichtung 10 enthält einen gedachten festen Bezugspunkt 34, der den Koordinatenursprung eines ebenfalls gedachten, intrinsischen Koordinatensystems der Erfassungseinrichtung 10 bildet. Das Koordinatensystem wird durch drei kartesische Achsen x', y' und z' definiert. Die Achse z' wird als intrinsische vertikale Achse bezeichnet.

Entlang der intrinsischen vertikalen Achse z' erstreckt sich eine Säule 26, an deren oberem Ende ein an sich bekannter Laserscanner 24 angeordnet ist. Mit Hilfe eines solchen Laserscanners 24 kann eine hier nicht dargestellte Umgebung dreidimensional geometrisch erfasst werden. Am unteren Ende der Säule 26 ist ein ebenfalls an sich bekanntes Inertial-Messsystem 12 angeordnet, mit dem Beschleunigungen in drei Translationsrichtungen und drei Rotationsrichtungen bestimmt werden können. Im mittleren Bereich der Säule 26 befindet sich eine Mittelkonsole 28, an der eine Kontrolleinheit 30 angeordnet ist, welche unter anderem als Schnittstelle für Eingaben eines Benutzers dienen kann. Von der Mittelkonsole 28 aus erstreckt sich in positiver y'-Richtung ein Hebelarm 32 mit einem Endpunkt 33. Zudem sind an der Mittelkonsole 28 zwei Laserabstandmesser 20 angeordnet, von denen einer in die positive x'-Richtung weist (hier nicht erkennbar) und ein anderer in die negative x'-Richtung.

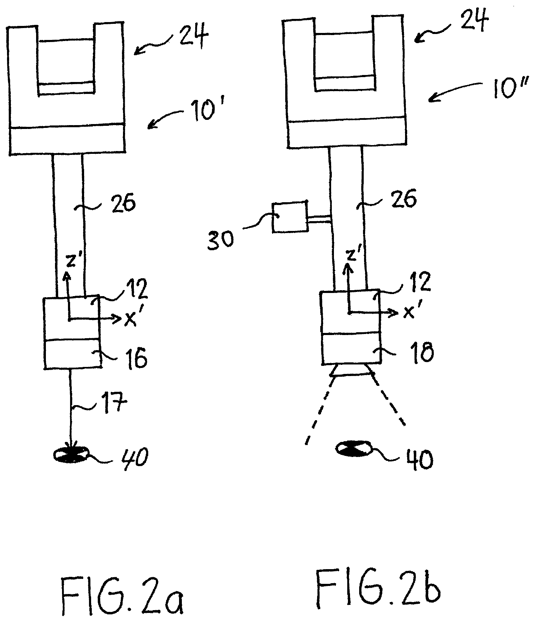

Die Figuren 2a bis 2c zeigen skizzenhaft drei mögliche Varianten von Erfassungseinrichtungen 10', 10", 10"', mit denen eine Positionierung und/oder Orientierung erleichtert werden können und/oder mit denen eine Relativkoordinate bestimmt werden kann.

Die Erfassungseinrichtung 10' gemäss Figur 2a enthält unterhalb des Inertial-Messsystems 12 einen Laser 16, der einen Laserstrahl 17 aussenden kann. Der Laser 16 ist derart angeordnet, dass der Laserstrahl 17 entlang der intrinsischen vertikalen Achse z' der Erfassungseinrichtung 10 verläuft. Hat ein Benutzer diesen Laserstrahl 17 auf einen Referenzpunkt 40 gerichtet, so liegt zu diesem Zeitpunkt der Referenzpunkt 40 auf der intrinsischen vertikalen Achse z'. Der Referenzpunkt 40 kann beispielsweise auf einem Fussboden angebracht sein. Stellt der Benutzer zusätzlich sicher (beispielsweise unter Verwendung von Neigungssensoren, die die Erfassungseinrichtung 10' ebenfalls enthalten kann), dass die intrinsische vertikale Achse z' vertikal verläuft (d.h. parallel zur Richtung der Schwerkraft), so ist der Bezugspunkt 34 der Erfassungseinrichtung 10 genau vertikal oberhalb des Referenzpunktes 40 positioniert. Ausgehend hiervon kann mit Hilfe der besonderen Ausführungsform des erfindungsgemässen Verfahrens im Schritt b) zunächst eine Fehlergrösse bestimmt werden und anschliessend im Schritt c) eine Korrektur der vom Inertial-Messsystem 12 vorläufig rechnerisch bestimmten Trajektorie 50 durchgeführt werden. Die Berechnung kann mit Hilfe hier nicht dargestellten Rechenmitteln erfolgen, die etwa in der Mittelkonsole 28 angeordnet sein können. Abweichend von der obigen Beschreibung muss die intrinsische vertikale Achse z' nicht zwangsläufig vertikal ausgerichtet werden; stattdessen kann mit Hilfe des Inertial-Messsystems 12 und/oder mindestens eines Neigungssensors eine Orientierung der Erfassungseinrichtung 10' bestimmt werden und bei der Bestimmung der Fehlergrösse entsprechend rechnerisch berücksichtigt werden.

Um zugleich auch die Höhe des Bezugspunktes 34 über dem Referenzpunkt (also eine weitere Relativkoordinate)zu bestimmten, kann auch ein Laser 16 vorgesehen sein, der eine Möglichkeit zur Abstandsmessung bietet.

Figur 2b zeigt eine weitere Ausführungsform einer erfindungsgemässen Erfassungseinrichtung 10", bei der am unteren Ende der Säule 26 eine CCD-Kamera 18 angeordnet ist. Diese CCD-Kamera 18 ist bezüglich der intrinsischen vertikalen Achse z' nach unten gerichtet, so dass mit Hilfe der CCD-Kamera 18 Bilder eines Fussbodens aufgenommen werden können. Die von der CCD-Kamera 18 aufgenommenen Bilder können auf einem Bildschirm dargestellt werden, der Teil der in Figur 1 dargestellten Kontrolleinheit 30 sein kann. Auf dem Bildschirm kann zusätzlich ein Punkt eingeblendet werden, der der intrinsischen vertikalen Achse z' entspricht. Hierdurch kann die Erfassungseinrichtung 10" besonders einfach bezüglich eines Referenzpunktes 40 positioniert werden. Zudem kann die Erfassungseinrichtung 10 unter Beachtung der von der Kamera 18 erzeugten Bilder entlang einer vorgegebenen Trajektorie bewegt werden, wie dies weiter unten noch im Detail beschrieben wird.

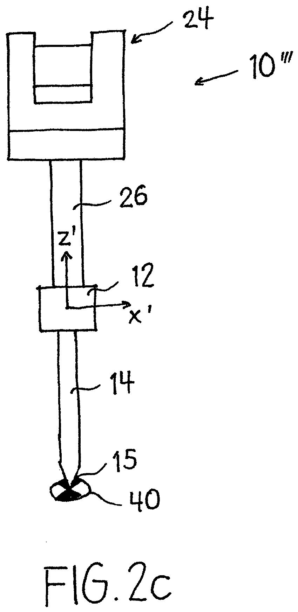

Die in Figur 2c gezeigte Ausführungsform enthält unterhalb des Inertial-Messsystems 12 einen insbesondere ausziehbaren Stab 14. Das untere Ende dieses Stabes 14 bildet einen Kontaktpunkt 15, der in Kontakt mit einem Referenzpunkt 40 gebracht werden kann. Wenn ein solcher Kontakt besteht und der Abstand zwischen Kontaktpunkt 15 und Bezugspunkt 34 der Erfassungseinrichtung bekannt ist, so ist auch der Abstand des Bezugspunktes 34 vom Referenzpunkt 40 festgelegt. Auch dies erlaubt also eine genaue Positionierung der Erfassungseinrichtung 10"', bei der die intrinsischer Achse z' der Erfassungseinrichtung 10"' durch den Referenzpunkt 40 verläuft.

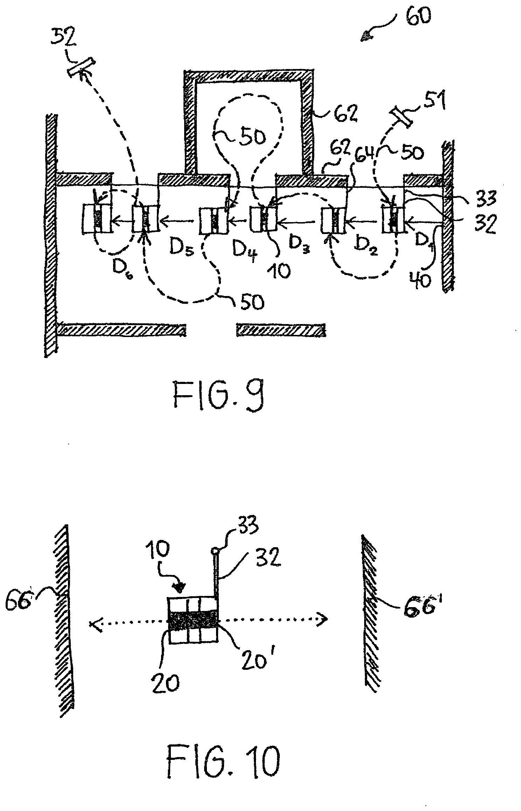

Analog kann auch der Endpunkt 33 des in Figur 1 gezeigten Hebelarms 32 als Kontaktpunkt eingesetzt werden. Hiermit kann ein horizontaler Abstand des Bezugspunktes 34 beispielsweise von einer Wand eingestellt werden, so wie dies weiter unten im Zusammenhang mit Figur 9 noch erläutert wird.

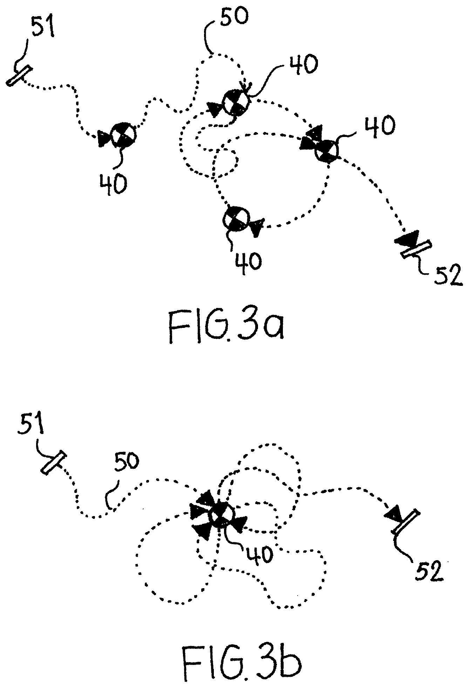

In den Figuren 3a, 3b, 4a, 4b und 5 ist in verschiedenen Beispielen dargestellt, wie eine Kalibrierung mit Hilfe des erfindungsgemässen Verfahrens durchgeführt werden kann.

Gemäss Figur 3a wird eine Erfassungseinrichtung (beispielsweise eine wie in den Figuren 1 oder 2a bis 2c dargestellte) von einem Startpunkt 51 entlang einer Trajektorie 50 zu einem Zielpunkt 52 bewegt. Figur 3a gibt eine schematische Draufsicht auf den Fussboden einer Produktionsstätte wieder. Auf diesem Fussboden sind vier Referenzpunkte 40 angeordnet, deren Koordinaten bekannt sind (beispielsweise kartesische Koordinaten). Einige der Referenzpunkte 40 werden während der Bewegung entlang der Trajektorie 50 nur einmal erreicht, während andere Referenzpunkte 40 mehrfach erreicht werden. Bei jedem Erreichen eines der Referenzpunkte 40 wird die Erfassungseinrichtung zum Ruhen gebracht und dabei so positioniert, dass der Bezugspunkt 34 der Erfassungseinrichtung genau vertikal oberhalb dieses Referenzpunktes 40 liegt. Diese Positionierung kann beispielsweise mit Hilfe eines Lasers 16, einer Kamera 18 oder eines Kontaktpunktes 15 bewerkstelligt und kontrolliert werden, so wie dies oben im Zusammenhang mit den Figuren 2a bis 2c detailliert beschrieben wurde.

Anschliessend wird zu diesem Ruhezeitpunkt eine Fehlergrösse bestimmt, welche die Abweichung der bekannten absoluten Koordinaten des jeweiligen Referenzpunktes 40 von den vom Inertial-Messsystem 12 vorläufig rechnerisch bestimmten Koordinaten charakterisiert. Die Bestimmung der Fehlergrösse kann mit einem Kalman-Filter erfolgen. Der Ruhezeitpunkt, zu dem die Fehlergrösse bestimmt wird, kann vom Benutzer manuell eingegeben werden, beispielsweise über die Kontrolleinheit 30 der Erfassungseinrichtung 10 gemäss Figur 1. Alternativ kann der Ruhezeitpunkt auch als ein Zeitpunkt bestimmt werden, an dem die vom Inertial-Messsystem 12 berechnete Geschwindigkeit und Winkelgeschwindigkeit null sind oder zumindest unterhalb von vorgegebenen Schwellenwerten liegen.

Daraufhin wird die vorläufig rechnerisch bestimmte Trajektorie 50 entsprechend korrigiert, falls die Fehlergrösse einen vorgegebenen Schwellenwert überschreitet. Dies erlaubt also eine Nachkalibrierung der vorläufig rechnerisch bestimmten Trajektorie 50.

Die Referenzpunkte 40 müssen nicht zwingend indiziert sein, müssen also insbesondere keinerlei eindeutige Nummerierung oder Codierung tragen, sondern können zueinander identisch sein, wie in Figur 3a dargestellt ist. Zum Ruhezeitpunkt können dann gleichzeitig für jeden der Referenzpunkte 40 die Relativkoordinate und die zugehörige Fehlergrösse bestimmt werden. So können also beispielsweise die auf eine horizontale Ebene projizierten Abstände zu jedem der Referenzpunkte 40 bestimmt werden. Die vom Inertial-Messsystem 12 vorläufig rechnerisch bestimmte Trajektorie 50 kann dann derart korrigiert werden, dass die vorläufig rechnerische bestimmte Position der Erfassungseinrichtung zum Ruhezeitpunkt durch die Position des Referenzpunktes 40 ersetzt wird, dessen Position der vorläufig rechnerisch bestimmten Position der Erfassungseinrichtung am nächsten liegt.

Figur 3b zeigt ein Beispiel, bei dem die absoluten Koordinaten eines Referenzpunktes 40 nicht bekannt sein müssen. Der Referenzpunkt 40 kann beispielsweise auch nur eine temporäre Markierung sein, die etwa als Klebepunkt auf einem Fussboden angebracht wird. In diesem Beispiel wird die Erfassungseinrichtung während der Bewegung entlang der Trajektorie 50 vom Startpunkt 51 zum Zielpunkt 52 insgesamt viermal über diesen Referenzpunkt 40 geführt. Ergibt die vorläufige rechnerische Bestimmung durch das Inertial-Messsystem 12 bei diesen vier Überschreitungen verschiedene Positionen, so kann dies zur Korrektur der rechnerisch bestimmten Trajektorie 50 verwendet werden.

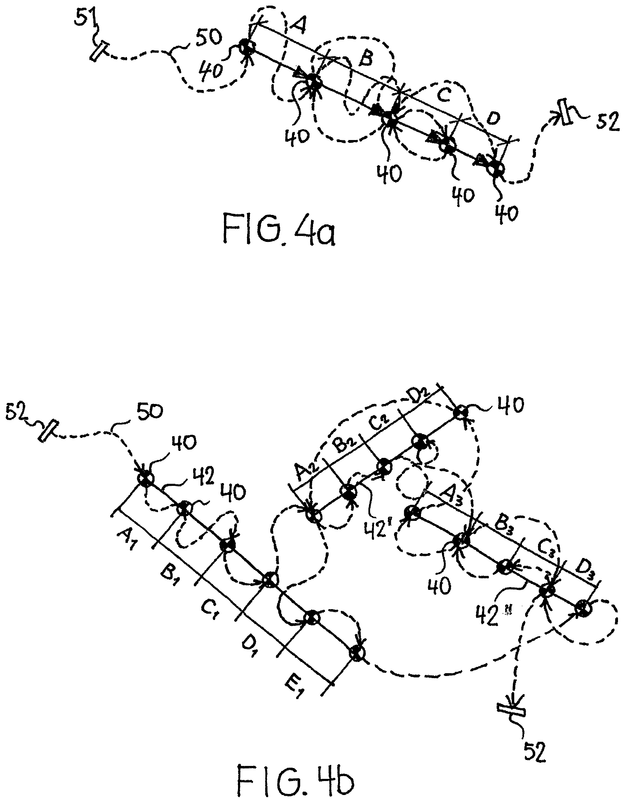

Bei dem in Figur 4a gezeigten Beispiel liegen fünf Referenzpunkte 40 auf einer gemeinsamen Referenzstrecke 42. Die Abstände A, B, C, D jeweils benachbarter Referenzpunkte 40 sind bekannt; die absoluten Koordinaten der Referenzpunkt 40 müssen jedoch nicht zwingend bekannt sein. Die Referenzpunkte 40 können beispielsweise durch ein hier nicht dargestelltes periodisches Muster eines Bodenbelages definiert sein. Die Erfassungseinrichtung wird wiederum entlang der Trajektorie 50 vom Startpunkt 51 zum Zielpunkt 52 bewegt, wobei jeder der Referenzpunkte 40 mindestens einmal überschritten wird. Falls beispielsweise das Inertial-Messsystem 12 während der Bewegung vom ersten Referenzpunkt 40 zum zweiten Referenzpunkt 40 einen Abstand dieser beiden Punkte A' liefert, der vom tatsächlichen Abstand A abweicht, so kann die vorläufig rechnerisch bestimmte Trajektorie entsprechend korrigiert werden. In Abweichung von Figur 4a ist es natürlich auch möglich, dass die Trajektorie 50 nur einige der Referenzpunkte 40 durchläuft. Je mehr verschiedene Referenzpunkte 40 durchlaufen werden und je häufiger dies geschieht, desto genauer wird die Kalibrierung.

Figur 4b zeigt eine weitere Variante, bei der insgesamt 16 Referenzpunkte 40 auf drei paarweise nicht zueinander parallelen Referenzstrecken 42, 42', 42" liegen. Die Abstände A1, B1, C1 etc. jeweils benachbarter Referenzpunkte 40 auf ein und derselben Referenzstrecke 42, 42', 42" sind bekannt; eine Kenntnis der absoluten Koordinaten der Referenzpunkt 40 ist jedoch nicht zwingend erforderlich. Die Trajektorie 50 vom Startpunkt 51 zum Zielpunkt 52 durchläuft jeden der Referenzpunkte 40 mindestens einmal. Wie der Figur 4b zu entnehmen ist, können dabei auch abwechselnd Referenzpunkte 40 der verschiedenen Referenzstrecken 42, 42', 42" durchlaufen werden. Basierend auf der Kenntnis, dass einzelne Teilmengen der Referenzpunkte 40 auf ein und derselben Referenzstrecke 42, 42', 42" liegen, kann eine Korrektur einer vom Inertial-Messsystem 12 vorläufig rechnerisch bestimmten Trajektorie erfolgen.

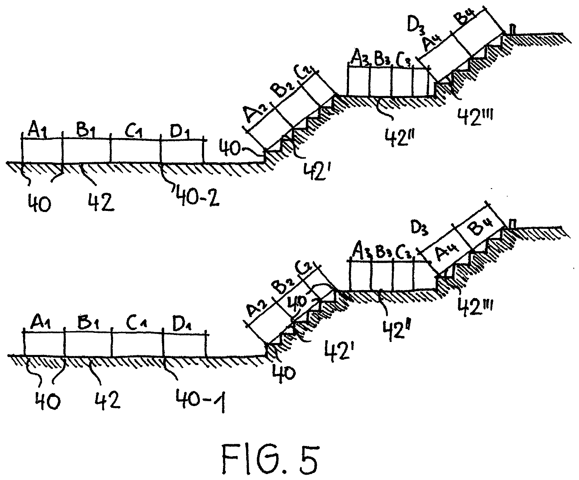

Figur 5 zeigt in einer Seitenansicht ein Treppenhaus mit mehreren übereinander liegenden Stockwerken. Hier liegen ebenfalls einzelne Teilmengen von Referenzpunkten 40, 40-1, 40-2 auf gemeinsamen Referenzstrecken 42, 42', 42", 42"'. Die beiden Referenzstrecken 42' und 42"' sind geneigt, wobei deren Referenzpunkte 40 jeweils durch die Vorderkanten mehrerer Stufen einer jeweiligen Treppe gebildet sind. Auch hier sind die Abstände A1, Bl etc. jeweils benachbarter Referenzpunkte 40 auf ein und derselben Referenzstrecke 42, 42', 42" und 42"' bekannt. Die Referenzpunkte 40-1 und 40-2 liegen genau vertikal übereinander. Ihre Projektionen auf eine horizontale Ebene haben also die gleichen absoluten kartesischen Koordinaten. Die Kenntnis dieser Information kann ebenfalls dazu dienen, eine Fehlergrösse zu bestimmen und eine vorläufig rechnerisch bestimmt Trajektorie gegebenenfalls zu korrigieren.

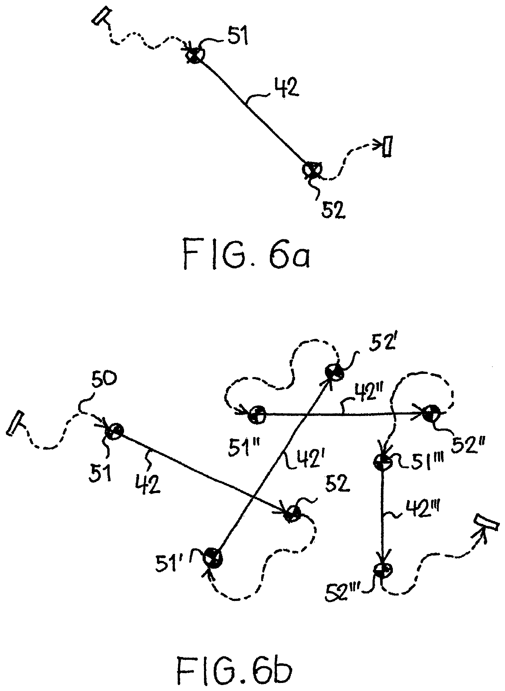

In den Figuren 6a und 6b ist dargestellt, wie eine Erfassungseinrichtung entlang einer vorgegebenen Trajektorie 50 bewegt werden kann. Diese vorgegebene Trajektorie 50 besteht aus einer Referenzstrecke 42. Diese Referenzstrecke 42 kann durch eine auf einem Fussboden markierte gerade Linie definiert sein, deren absolute Koordinaten jedoch nicht unbedingt bekannt sein müssen. An einem Startpunkt 51 teilt der Benutzer der Erfassungseinrichtung mit (beispielsweise durch Eingabe über eine Schnittstelle), dass er die Erfassungseinrichtung ab jetzt entlang der Referenzstrecke 42 bis zu einem Zielpunkt 52 führen wird, so genau ihm dies möglich ist. Um dies zu erleichtern, kann ein von einem Laser 16 der Erfassungseinrichtung ausgesandter Laserstrahl 17 entlang der Linie geführt werden (siehe Figur 2a), die Linie kann mit Hilfe einer Kamera 18 und eines Bildschirms verfolgt werden (siehe Figur 2b), oder ein Kontaktpunkt 15 kann auf der Linie entlang geführt werden (siehe Figur 2c). Anhand der Information, dass die Erfassungseinrichtung entlang einer geraden Linie geführt wird, kann wiederum eine Korrektur der vorläufig rechnerisch bestimmten Trajektorie erfolgen, falls das Inertial-Messsystem 12 keine solche gerade Linie ermittelt.

In Weiterführung von Figur 6a zeigt Figur 6b eine Trajektorie 50, die vier Referenzstrecken 42, 42', 42", 42"' mit jeweiligen Startpunkten 51, 51', 51", 51"' und Zielpunkten 52, 52', 52", 52"' enthält. Die absoluten Koordinaten der Startpunkte 51, 51', 51", 51"' und Zielpunkte 52, 52', 52", 52"' und auch die Längen der Referenzstrecken 42, 42', 42", 42"' müssen nicht unbedingt bekannt sein. Wie der Darstellung zu entnehmen ist, sind diese vier Referenzstrecken 42, 42', 42", 42"' nicht paarweise parallel zueinander, und teilweise treten auch Überschneidungen der Referenzstrecken auf. Am Startpunkt 51, 51', 51", 51"' jeder Referenzstrecke 42, 42', 42", 42"' teilt der Benutzer der Erfassungseinrichtung mit, dass er diese nun entlang einer geraden Linie bewegen wird, und am Zielpunkt 52, 52', 52", 52"' gibt er an, dass das Ende der geraden Linie erreicht ist. Analog zur in Figur 6a dargestellten Trajektorie 50 kann auch hierdurch eine Korrektur der vom Inertial-Messsystem 12 vorläufig rechnerisch bestimmten Trajektorie erfolgen.

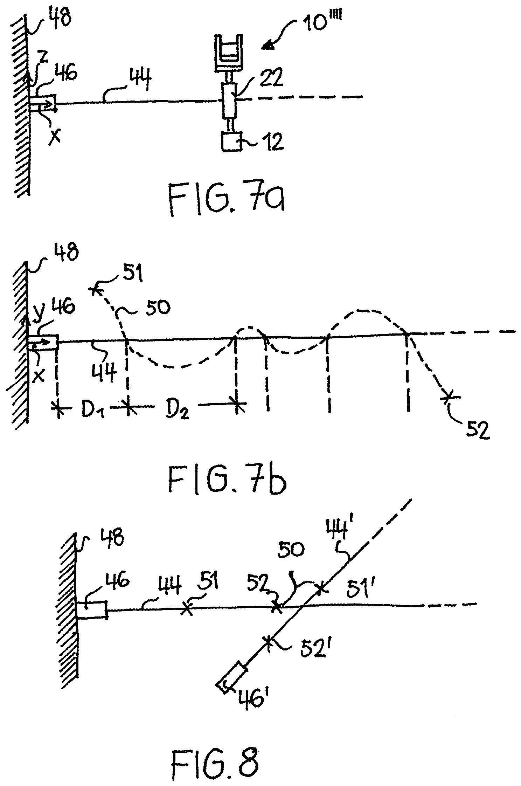

In Figur 7a ist in einer Seitenansicht dargestellt, wie mit Hilfe eines Referenzlaserstrahls 44 eine Referenzstrecke definiert werden kann. Der Referenzlaserstrahl 44 wird von einem Laser 46 ausgesandt, der in diesem Beispiel fest an einer Wand 48 montiert ist. Er ist horizontal ausgerichtet und verläuft entlang einer ortsfesten x-Achse, wodurch er eine Bezugshöhe bezüglich einer z-Achse definiert. Die hier dargestellte Erfassungseinrichtung 10"" verfügt über einen 360°-Laserdetektor 22. Basierend auf der Detektion des Referenzlaserstrahls 44 kann die relative Position und/oder Orientierung der Erfassungseinrichtung 10"" zum Referenzlaserstrahl 44 bestimmt werden. Insbesondere kann der Abstand des Referenzlaserstrahls 44 von der intrinsischen vertikalen Achse z' der Erfassungseinrichtung 10"" bestimmt werden. Zusätzlich kann mit Hilfe des Laserdetektors 22 bestimmt werden, an welchem Punkt der intrinsischen vertikalen Achse (das heisst bei welchem z'-Wert) der Referenzlaserstrahl 44 auftrifft. Auf diese Weise kann eine konstante Höhe der Erfassungseinrichtung 10"" durch entsprechende Bewegung der Erfassungseinrichtung 10"" durch den Benutzer gewährleistet werden oder bei Abweichung von der Bezughöhe eine Höhendifferenz bestimmt und zur Korrektur der rechnerisch bestimmten Trajektorie verwendet werden.

Alternativ oder zusätzlich zum Laserdetektor 22 kann die Erfassungseinrichtung 10"" auch mindestens einen hier nicht dargestellten Reflektor enthalten. Trifft der Referenzlaserstrahl 44 auf einen solchen Reflektor, so kann dies vom Benutzer leicht erkannt werden. Dies erleichtert ebenfalls die Einhaltung der vorgegebenen Bezugshöhe.

Der Laser 46 kann auch einen Abstandmesser enthalten, mit dessen Hilfe der Abstand zum Laserdetektor 22 und/oder zu einem Reflektor und damit zur Erfassungseinrichtung 10"" festgestellt werden kann. Der Abstandmesser kann in an sich bekannter Weise eine rotierende Ablenkeinheit enthalten. Auf diese Weise kann ebenfalls die vom Inertial-Messsystem 12 vorläufig bestimmte Trajektorie korrigiert werden. Dies kann insbesondere zu den Zeitpunkten geschehen, an denen der Referenzlaserstrahl 44 auf den Laserdetektor 22 und/oder einen Reflektor trifft.

Im Falle einer bestimmten Höhendifferenz erfolgt die Synchronisation mit Hilfe des Laserdetektors 22 und/oder eines Reflektors. Eine allfällige Höhendifferenz kann direkt mit Hilfe des Laserdetektors 22 bestimmt werden. Falls mit Hilfe des Lasers 46 nicht nur die Höhe, sondern auch die horizontale Position des Laserdetektors 22 bestimmt wird, so kann hierfür eine zusätzliche Datenübertragungseinheit vorgesehen werden, um eine Echtzeit-Auswertung zu ermöglichen.

In Abweichung von der in Figur 7a dargestellten Ausführungsform kann der Laser 46 natürlich auch transportabel sein. Falls die Koordinaten des von ihm ausgesandten Referenzlaserstrahls 44 bekannt sind, so kann diese Information zur Korrektur der vorläufig rechnerisch bestimmten Trajektorie verwendet werden. Aber auch wenn die absoluten Koordinaten des Referenzlaserstrahls nicht bekannt sind, so kann dieser dennoch eine Referenzstrecke definieren, so wie dies weiter unten im Zusammenhang mit Figur 8 erläutert wird.

Figur 7b zeigt eine Draufsicht auf die Anordnung gemäss Figur 7a. Die hier nicht dargestellte Erfassungseinrichtung wird entlang einer Trajektorie 50 bewegt. Jedes Mal, wenn die Erfassungseinrichtung den Referenzlaserstrahl 44 passiert, so wird dies vom Laserdetektor 22 registriert und kann der Korrektur der vom Inertial-Messsystem 12 vorläufig berechneten Trajektorie dienen. Das Passieren des Referenzlaserstrahls 44 kann dem Benutzer akustisch und/oder optisch mitgeteilt werden. Die Abstände D₁ und D₂ werden ebenfalls mit Hilfe des Lasers 46 bestimmt. Auch in diesem Fall kann eine Datenübertragung der so ermittelten Abstände erfolgen.

Figur 8 zeigt in einer Draufsicht, wie mit Hilfe eines ersten, fest installierten ersten Lasers 46 und eines zweiten, transportablen Lasers 46' zwei Referenzlaserstrahlen 44, 44' erzeugt werden können. Ähnlich wie dies in Figur 6b gezeigt ist, kann eine Erfassungseinrichtung entlang einer Trajektorie 50 bewegt werden, die zunächst von einem ersten Startpunkt 51 entlang des ersten Referenzlaserstrahls 44 zu einem ersten Zielpunkt 52 verläuft, dann auf einer nicht definierten Trajektorie zu einem zweiten Startpunkt 51' auf dem zweiten Referenzlaserstrahl 44' und anschliessend entlang dieses zweiten Referenzlaserstrahls 44' zu einem zweiten Zielpunkt 52'. Der Benutzer kann über eine Kontrolleinheit eingeben, wann er den ersten Startpunkt 51, den ersten Zielpunkt 52, den zweiten Startpunkt 51' und den zweiten Zielpunkt 52' erreicht. Hieraus kann ebenfalls eine Korrektur der vom Inertial-Messsystem 12 vorläufig bestimmten Trajektorie erreicht werden.

Figur 9 zeigt in einer Draufsicht, wie die Erfassungseinrichtung 10 gemäss Figur 1 in einer Umgebung 60 eingesetzt werden kann, die eine Vielzahl von Wänden 62 enthält. Die Erfassungseinrichtung 10 wird von einem Startpunkt 51 entlang einer Trajektorie 50 zu einem Zielpunkt 52 bewegt. An verschiedenen Punkten der Trajektorie 50 wird der Endpunkt 33 des Hebelarms 32 mit Kanten 64 der Wände 62 in Kontakt gebracht, wobei diese Kanten 64 Referenzpunkte der Umgebung 60 bilden. Sind die absoluten Koordinaten der Kanten 64 bekannt, so kann auf dieser Grundlage die vom Inertial-Messsystem 12 vorläufig bestimmte Trajektorie entsprechend korrigiert werden. Mit Hilfe der Laserabstandmesser 20 (siehe Figur 1) kann an den gleichen Stellen der Trajektorie 50 der Abstand zu einem Referenzpunkt 40 an einer der Wände 62 bestimmt werden. Auch basierend darauf kann die vorläufig bestimmte Trajektorie gegebenenfalls korrigiert werden. Je häufiger ein Kontakt zwischen dem Endpunkt 33 des Hebelarms 32 und den Kanten 64 der Wände 62 hergestellt wird und je häufiger der Abstand zum Referenzpunkt 40 bestimmt wird, desto präziser kann die Trajektorie 50 bestimmt werden.

Figur 10 zeigt in einer weiteren Draufsicht, wie mit Hilfe von zwei entgegengesetzt angeordneten Laserabstandmessern 20 die Abstände zu zwei gegenüber liegenden Wänden 66, 66' bestimmt werden können. Hierdurch ist eine noch genauere Korrektur der Trajektorie möglich.

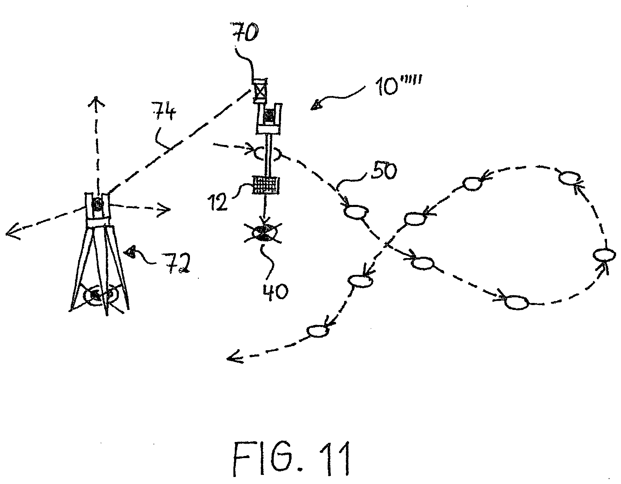

In Figur 11 ist schematisch eine Erfassungseinrichtung 10""' mit einem Inertial-Messsystem 12 und einem Retroreflektor in Form eines Rundprismas 70 dargestellt. Bei dem Rundprisma 70 kann es sich etwa um das Modell GRZ4 handeln, welches von Leica Geosystems AG, CH-8152 Glattbrugg erhältlich ist. Von einem zielverfolgenden Tachymeter 72 wird ein Lichtstrahl 74 ausgesandt, der vom Rundprisma 70 zum Tachymeter 72 reflektiert wird. Hierdurch lässt sich auf an sich bekannte Weise die Position der Erfassungseinrichtung 10""' bestimmen. Bevorzugt findet diese Bestimmung zu einem Ruhezeitpunkt der Erfassungseinrichtung 10""' statt, an dem diese über einem Referenzpunkt 40 ruht. Auf der Grundlage dieser Bestimmung kann dann gegebenenfalls eine Korrektur der vom Inertial-Messsystem 12 vorläufig rechnerisch bestimmten Trajektorie erfolgen.

## Patentansprüche

1. Verfahren zur Kalibrierung einer Erfassungseinrichtung (10; 10'; 10"; 10"'; 10""; 10""'), welche zur dreidimensionalen geometrischen Erfassung einer Umgebung (60) ausgebildet ist und welche mindestens ein Inertial-Messsystem (12) enthält, wobei das Verfahren die folgenden Schritte enthält:
• anhand des Inertial-Messsystems (12), vorläufiges rechnerisches Bestimmen einer Trajektorie (50) der Erfassungseinrichtung durch zeitabhängiges Bestimmen der Position und der Orientierung der Erfassungseinrichtung relativ zur Umgebung,
a) jeweiliges Positionieren der Erfassungseinrichtung an mehreren Referenzpunkten (40),
wobei die Positionierung der Erfassungseinrichtung jeweils einen Ruhezeitpunkt begründet,
• b) jeder zu einem Ruhezeitpunkt vom Inertial-Messsystem (12) vorläufig rechnerisch bestimmten Position, Bestimmen mehrerer Fehlergrössen, welche jeweils eine Abweichung einer Position eines Referenzpunktes (40) von einer zu einem Ruhepunkt vom Inertial-Messsystem (12) vorläufig rechnerisch bestimmten Position charakterisiert;
• c) Korrigieren der vom Inertial-Messsystem (12) vorläufig rechnerisch bestimmten Trajektorie (50), dass jede zu einem Ruhezeitpunkt vorläufig rechnerisch bestimmte Position der Erfassungseinrichtung durch eine Position ersetzt wird, die demjenigen Referenzpunkt entspricht, für den die bestimmte Fehlergrösse am kleinsten ist.

2. Verfahren gemäss Anspruch 1,
wobei ein Ruhezeitpunkt
• mit Hilfe des Inertial-Messsystems als ein Zeitpunkt bestimmt wird, an dem die vom Inertial-Messsystem berechnete Geschwindigkeit und Winkelgeschwindigkeit oder eine rechnerische Kombinationen davon null sind oder zumindest unterhalb von vorgegebenen Schwellenwerten liegen, oder
• über eine Schnittstelle der Erfassungseinrichtung durch einen Benutzer manuell bestimmt wird, wenn er die Erfassungseinrichtung zum Ruhen gebracht hat.

3. Verfahren gemäss einem der vorangehenden Ansprüche,
wobei, im Falle einer vorgegebenen Relativkoordinate, zum Positionieren zumindest einer der folgenden Schritte ausgeführt wird:
• Herstellen eines mechanischen Kontaktes zwischen einem Kontaktpunkt (15; 33) der Erfassungseinrichtung (10"') und einem Referenzpunkt (40),
• Richten eines von der Erfassungseinrichtung (10') ausgesandten Lichtstrahls, insbesondere eines Laserstrahls (17), auf den Referenzpunkt (40) und
• Richten einer Kamera (18) auf den Referenzpunkt (40).

4. Verfahren gemäss einem der vorangehenden Ansprüche,
wobei, im Falle einer nicht vorgegebenen, sondern durch eine Messung bestimmten Relativkoordinate, die Relativkoordinate optisch bestimmt wird, insbesondere mit Hilfe mindestens eines Laserabstandmessers (20; 20').

5. Verfahren gemäss einem der vorangehenden Ansprüche,
wobei mindestens eine absolute Koordinate mindestens eines Referenzpunktes (40) bekannt ist und beim Bestimmen der Fehlergrösse verwendet wird.

6. Verfahren gemäss einem der vorangehenden Ansprüche,
wobei mindestens eine Relativkoordinate (A; B; C; D; ...), die die relative Position mindestens zweier Referenzpunkte (40) zueinander charakterisiert, bekannt ist und beim Bestimmen der Fehlergrösse verwendet wird.

7. Verfahren gemäss einem der vorangehenden Ansprüche,
wobei, im Falle einer vorgegebenen Relativkoordinate, mehrfach nacheinander das Positionieren der Erfassungseinrichtung in einer relativen Position zu demselben Referenzpunkt (40) durchgeführt wird.

8. Verfahren gemäss einem der vorangehenden Ansprüche,
wobei mindestens drei, bevorzugt mindestens fünf verschiedene Referenzpunkte (40) auf einer gemeinsamen Referenzstrecke (42; 42'; 42"; 42"') liegen.

9. Verfahren gemäss Anspruch 8,
wobei mindestens eine Referenzstrecke (42; 42') durch einen Referenzlaserstrahl (44; 44') definiert wird.

10. Verfahren gemäss Anspruch 9,
wobei der Referenzlaserstrahl (44; 44') mithilfe eines Laserdetektors (22) detektiert wird und, im Falle einer vorgegebenen Relativkoordinate, basierend auf der Detektion des Referenzlaserstrahls (44; 44') die relative Position der Erfassungseinrichtung (10; 10'; 10"; 10"'; 10""; 10""') zum Referenzlaserstrahl (44) bestimmt wird.

11. Verfahren gemäss einem der vorangehenden Ansprüche,
wobei mehrere Referenzpunkte (40) auf einer vorgegebenen Trajektorie (50) liegen, die Erfassungseinrichtung (10; 10'; 10"; 10"'; 10""; 10""') entlang der vorgegebenen Trajektorie (50) bewegt wird und die Fehlergrösse aus der Abweichung der vom Inertial-Messsystem (12) vorläufig rechnerisch bestimmten Trajektorie von der vorgegebenen Trajektorie (50) bestimmt wird.

12. Erfassungseinrichtung (10; 10'; 10"; 10"'; 10""; 10""') zur dreidimensionalen geometrischen Erfassung einer Umgebung (60), enthaltend mindestens ein Inertial-Messsystem (12), welches ausgebildet ist zum vorläufigen rechnerischen Bestimmen einer Trajektorie (50) der Erfassungseinrichtung (10; 10'; 10"; 10"'; 10""; 10""') durch zeitabhängiges Bestimmen der Position und der Orientierung der Erfassungseinrichtung relativ zur Umgebung,
wobei die Erfassungseinrichtung dazu ausgebildet ist
(i) jeweils an mehreren Referenzpunkten (40) positioniert zu werden, wobei die Positionierung der Erfassungseinrichtung einen Ruhezeitpunkt begründet, und
wobei die Erfassungseinrichtung Rechenmittel aufweist, welche ausgebildet sind zum:
• zu jeder zu einem Ruhezeitpunkt vom Inertial-Messsystem (12) vorläufig rechnerisch bestimmten Position, Bestimmen mehrerer Fehlergrössen, welche jeweils eine Abweichung einer Position eines Referenzpunktes (40) von einer zu einem Ruhezeitpunkt vom Inertial-Messsystem (12) vorläufig rechnerisch bestimmten Position charakterisiert, und
• derartigen Korrigieren der vom Inertial-Messsystem (12) vorläufig rechnerisch bestimmten Trajektorie (50), dass jede zu einem Ruhezeitpunkt vorläufig rechnerisch bestimmte Position der Erfassungseinrichtung durch eine Position ersetzt wird, die demjenigen Referenzpunkt entspricht, für den die bestimmte Fehlergrösse am kleinsten ist.

13. Erfassungseinrichtung (10; 10'; 10"; 10"'; 10""; 10""') gemäss Anspruch 12,
wobei die Rechenmittel derart ausgebildet sind, um ein Verfahren gemäss einem der Ansprüche 1 bis 11 durchzuführen.

14. Erfassungseinrichtung (10; 10'; 10"; 10"'; 10""; 10""') gemäss einem der Ansprüche 12 und 13,
aufweisend mindestens eines von:
• Positionierungsmittel (15; 33; 16; 18) zur Positionierung der Erfassungseinrichtung (10; 10'; 10"; 10"'; 10""; 10""') in einer relativen Position zu mindestens einem Referenzpunkt (40), die durch mindestens eine vorgegebene Relativkoordinate charakterisiert ist,
• Bestimmungsmittel (20; 20') zur Bestimmung mindestens einer Relativkoordinate, die die relative Position der Erfassungseinrichtung (10; 10'; 10"; 10"'; 10""; 10""') zu mindestens einem Referenzpunkt (40) charakterisiert, und
• eine Schnittstelle, über welche durch einen Benutzer manuell bestimmt wird, wenn er die Erfassungseinrichtung zum Ruhen gebracht hat.

15. Erfassungseinrichtung (10; 10'; 10"; 10"'; 10""; 10""') gemäss einem der Ansprüche 12 bis 14,
wobei das Inertial-Messsystem dazu ausgebildet ist, den Ruhezeitpunkt als einen Zeitpunkt zu bestimmen, an dem die vom Inertial-Messsystem berechnete Geschwindigkeit und Winkelgeschwindigkeit oder eine rechnerische Kombinationen davon null sind oder zumindest unterhalb von vorgegebenen Schwellenwerten liegen.

## Claims

1. A method for calibrating a detection device (10; 10'; 10"; 10"'; 10""; 10""') which is designed for three-dimensional geometrical detection of an environment (60) and which comprises at least one inertial measurement system (12), wherein the method comprises the following steps:
with the inertial measurement system (12), provisionally computationally determining a trajectory (50) of the detection device by time-dependently determining the position and the orientation of the detection device relative to the environment,
positioning the detection device at a plurality of reference points (40), wherein each positioning of the detection device constitutes a point in time of rest,
for each position provisionally computationally determined by the inertial measurement system (12) at a point in time of rest, determining a plurality of error variables which in each case characterise a deviation of a position of a reference point (40) from a position provisionally computationally determined by the inertial measurement system (12) at point in time of rest;
correcting the trajectory (50) provisionally computationally determined by the inertial measurement system (12) in such a way that each position of the detection device provisionally computationally determined at a point in time of rest is substituted by a position that corresponds to a reference point, for which the error variable is the smallest.

2. The method according to claim 1, wherein a point in time of rest is determined either:
by the inertial measurement system at a point in time at which the linear velocity and the angular velocity calculated by the inertial measurement system or an arithmetical combination thereof are either zero or at least below predefined threshold values, or
manually by a user via an interface comprised by the detection device when the user has brought the detection device to rest.

3. The method according to any of the preceding claims, wherein for positioning, in case of a predetermined relative coordinate, at least one of the following steps is performed:
effecting a mechanical contact between a contact point (15; 33) of the detection device (10"') with a reference point (40),
directing a light beam, in particular a laser beam (17), emitted by the detection device (10') onto the reference point (40), and
directing a camera (18) at the reference point (40).

4. The method according to any of the preceding claims, wherein, in case of a relative coordinate which is not predetermined but determined by a measurement, the relative coordinate is determined optically, in particular by at least one laser distance measuring device (20; 20').

5. The method according to any of the preceding claims, wherein at least one absolute coordinate of at least one reference point (40) is known and is used when determining the error variable.

6. The method according to any of the preceding claims, wherein at least one relative coordinate (A; B; C; D; ...) which characterises the relative position of at least two reference points (40) with respect to one another is known and is used when determining the error variable.

7. The method according to any of the preceding claims, wherein, in case of a predetermined relative coordinate, positioning of the detection device is carried out multiple times successively in a relative position to the same reference point (40).

8. The method according to any of the preceding claims, wherein at least three, preferably at least five, different reference points (40) lie on a common reference line segment (42; 42'; 42"; 42"').

9. The method according to claim 8, wherein at least one reference line segment (42; 42') is defined by a reference laser beam (44; 44').

10. The method according to claim 9, wherein the reference laser beam (44; 44') is detected by a laser detector (22) and, in case of a predetermined relative coordinate, the relative position of the detection device (10; 10'; 10"; 10"'; 10""; 10""') to the reference laser beam (44; 44') is determined based on the detection of the reference laser beam (44; 44').

11. The method according any of the preceding claims, wherein a plurality of reference points (40) lie on a predefined trajectory (50), the detection device (10; 10'; 10"; 10"'; 10""; 10""') is moved along the predefined trajectory (50) and the error variable is determined from the deviation of the trajectory provisionally computationally determined by the inertial measurement system (12) from the predefined trajectory (50).

12. A detection device (10; 10'; 10"; 10"'; 10""; 10""') for three-dimensional geometrical detection of an environment (60), the detection device comprising:
at least one inertial measurement system (12) which is configured for provisionally computationally determining a trajectory (50) of the detection device (10; 10'; 10"; 10"'; 10""; 10""') by time-depentently determining the position and the orientation of the detection device relative to the environment,
wherein the detection device is configured for being positioned at a plurality of reference points, wherein each positioning of the detection device constitutes a point in time of rest, and
wherein the detection device comprises a computer which are configured for,
for each position provisionally computationally determined by the inertial measurement system at a point in time of rest, determining a plurality of error variables which in each case characterise a deviation of a position of a reference point (40) from a position provisionally computationally determined by the inertial measurement system (12) at a point in time of rest; and
correcting the trajectory (50) provisionally computationally determined by the inertial measurement system (12) in such a way that each position of the detection device provisionally computationally determined at a point in time of rest is substituted by a position that corresponds to a reference point, for which the error variable is the smallest.

13. The detection device (10; 10'; 10"; 10"'; 10""; 10""') according to claim 12, wherein the computer is configured for carrying out a method according to any of claims 1 to 11.

14. The detection device (10; 10'; 10"; 10"'; 10""; 10""') according to any of claims 12 and 13, comprising at least one of:
positioning means (15; 33; 16; 18) for positioning the detection device (10; 10'; 10"; 10"'; 10""; 10""') in a relative position to at least one reference point (40) which is **characterised by** at least one predetermined relative coordinate,
determination means (20; 20') for determining at least one relative coordinate which characterises the relative position of the detection device (10; 10'; 10"; 10"'; 10""; 10""') to at least one reference point (40),
an interface via which a user manually determines when he has brought the detection device to rest.

15. The detection device (10; 10'; 10"; 10"'; 10""; 10""') according to any of claims 12 to 14, wherein the inertial measurement system is configured for determining a point in time of rest at a point in time at which at which the linear velocity and the angular velocity calculated by the inertial measurement system or an arithmetical combination thereof are either zero or at least below predefined threshold values.

## Revendications

1. Procédé de calibration d'un dispositif de saisie (10 ; 10' ; 10" ; 10"' ; 10"" ; 10""'), lequel est conçu pour la saisie tridimensionnelle géométrique d'un environnement (60) et lequel inclut au moins un système de mesure inertiel (12), dans lequel le procédé inclut les étapes suivantes :
• au moyen du système de mesure inertiel (12), détermination arithmétique préliminaire d'une trajectoire (50) du dispositif de saisie par détermination en fonction du temps de la position et de l'orientation du dispositif de saisie relativement à l'environnement,
a) positionnement respectif du dispositif de saisie sur une pluralité de points de référence (40),
dans lequel le positionnement du dispositif de saisie justifie respectivement un instant de repos,
• b) à chaque position préliminaire déterminée arithmétiquement par le système de mesure inertiel (12) à un instant de repos, détermination de plusieurs grandeurs de défaut, caractérisant respectivement une déviation d'une position d'un point de référence (40) par rapport à une position préliminaire déterminée arithmétiquement par le système de mesure inertiel (12) à un point de repos ;
• c) correction de la trajectoire préliminaire (50) déterminée arithmétiquement par le système de mesure inertiel (12), de sorte que chaque position préliminaire du dispositif de saisie déterminée arithmétiquement à un instant de repos est remplacée par une position correspondant au point de référence pour lequel la grandeur de défaut est la plus basse.

2. Procédé selon la revendication 1,
dans lequel un instant de repos
• est déterminé à l'aide du système de mesure inertiel en tant qu'instant, où la vitesse et la vitesse angulaire calculées par le système de mesure inertiel ou une combinaison arithmétique de celles-ci sont nulles ou au moins à l'intérieur de valeurs de seuil prédéfinies, ou
• est déterminé manuellement par un utilisateur sur une interface du dispositif de saisie, lorsque celui-ci a mis le dispositif de saisie à l'arrêt.

3. Procédé selon l'une des revendications précédentes, dans lequel, en cas de coordonnées relatives prédéfinies, au moins une des étapes suivantes est exécutée pour le positionnement :
• création d'un contact mécanique entre un point de contact (15 ; 33) du dispositif de saisie (10") et un point de référence (40),
• direction d'un rayon lumineux envoyé depuis le dispositif de saisie (10'), en particulier d'un rayon laser (17) sur le point de référence (40) et
• direction d'une caméra (18) sur le point de référence (40).

4. Procédé selon l'une des revendications précédentes, dans lequel, en cas de coordonnées relatives non prédéfinies mais déterminées par une mesure, les coordonnées relatives sont déterminées optiquement, en particulier) à l'aide d'au moins un télémètre laser (20 ; 20').

5. Procédé selon l'une des revendications précédentes, dans lequel au moins une des coordonnées absolues d'au moins un point de référence (40) est connue et est utilisée lors de la détermination de la grandeur de défaut.

6. Procédé selon l'une des revendications précédentes, dans lequel au moins une des coordonnées relatives (A; B ; C ; D ; ...), caractérisant la position relative d'au moins deux points de référence (40) l'un par rapport à l'autre, est connue et est utilisée lors de la détermination de la grandeur de défaut.

7. Procédé selon l'une des revendications précédentes, dans lequel, en cas de coordonnées relatives prédéfinies, le positionnement du dispositif de saisie dans une position relative au même point de référence (40) est effectué successivement à plusieurs reprises.

8. Procédé selon l'une des revendications précédentes, dans lequel, au moins trois, de préférence au moins cinq points de référence (40) différents, sont situés sur une ligne de référence commune (42 ; 42' ; 42" ; 42"').

9. Procédé selon la revendication 8, dans lequel au moins une ligne de référence (42 ; 42') est définie au moyen d'un rayon laser de référence (44 ; 44').

10. Procédé selon la revendication 8, dans lequel le rayon laser de référence (44 ; 44') est détecté à l'aide d'un détecteur laser (22) et, en cas de coordonnées relatives prédéfinies, la position relative du dispositif de saisie (10 ; 10' ; 10" ; 10"' ; 10"" ; 10""') par rapport au rayon laser de référence (44) est déterminée en se basant sur la détection du rayon laser de référence (44 ; 44').

11. Procédé selon l'une des revendications précédentes, dans lequel plusieurs points de référence (40) sont situés sur une trajectoire prédéfinie (50), le dispositif de saisie (10 ; 10' ; 10" ; 10"' ; 10"" ; 10""') est déplacé le long de la trajectoire prédéfinie (50) et la grandeur de défaut est déterminée à partie de la déviation de la trajectoire préliminaire déterminée arithmétiquement par le système de mesure inertiel (12) par rapport à la trajectoire prédéfinie (50).

12. Dispositif de saisie (10; 10' ; 10" ; 10"' ; 10"" ; 10""') destiné à la saisie tridimensionnelle géométrique d'un environnement (60), incluant au moins un système de mesure inertiel (12), lequel est conçu pour la détermination arithmétique préliminaire d'une trajectoire (50) du dispositif de saisie (10 ; 10' ; 10" ; 10"' ; 10"" ; 10""') par détermination en fonction du temps de la position et de l'orientation du dispositif de saisie relativement à l'environnement,
dans lequel le dispositif de saisie est conçu de façon à
(i) être positionné respectivement sur plusieurs points de référence (40), dans lequel le positionnement du dispositif de saisie justifie un instant de repos, et
dans lequel le dispositif de saisie comporte un moyen de calcul, lequel est conçu pour effectuer :
• à chaque position préliminaire déterminée arithmétiquement par le système de mesure inertiel (12) à un instant de repos, détermination d'une pluralité de grandeurs de défaut, caractérisant respectivement une déviation d'une position d'un point de référence (40) par rapport à une position préliminaire déterminée arithmétiquement par le système de mesure inertiel (12) à un instant de repos, et
• correction de la trajectoire préliminaire (50) déterminée arithmétiquement par le système de mesure inertiel (12), de sorte que chaque position préliminaire du dispositif de saisie déterminée arithmétiquement à un instant de repos est remplacée par une position correspondant au point de référence pour lequel la grandeur de défaut est la plus basse.

13. Dispositif de saisie (10 ; 10' ; 10" ; 10"' ; 10"" ; 10""') selon la revendication 12, dans lequel le moyen de calcul est conçu de façon à exécuter un procédé selon l'une des revendications 1 à 11.

14. Dispositif de saisie (10 ; 10' ; 10'' ; 10"' ; 10"" ; 10""') selon l'une des revendications 12 et 13, comprenant au moins :
• un moyen de positionnement (15 ; 33 ; 16 ; 18) destiné à positionner le dispositif de saisie (10 ; 10' ; 10" ; 10"' ; 10"" ; 10""') dans une position relative à au moins un point de référence (40), **caractérisée par** au moins une des coordonnées relatives prédéfinies,
• un moyen de détermination (20 ; 20') destiné à déterminer au moins une des coordonnées relatives caractérisant la position relative du dispositif de saisie (10 ; 10' ; 10" ; 10"' ; 10"" ; 10""') par rapport à au moins un point de référence, et
• une interface, sur laquelle un utilisateur détermine manuellement la mise à l'arrêt du dispositif de saisie.

15. Dispositif de saisie (10 ; 10' ; 10" ; 10'" ; 10"" ; 10""') selon l'une des revendications 12 à 14,
dans lequel le système de mesure inertiel est conçu de façon à déterminer l'instant de repos en tant qu'instant où la vitesse et la vitesse angulaire calculées par le système de mesure inertiel ou une combinaison arithmétique de celles-ci sont nulles ou au moins à l'intérieur de valeurs de seuil prédéfinies.
